(19) **Europäisches Patentamt / European Patent Office / Office européen des brevets**

(11) **EP 4 703 058 A1**

(12) **EUROPEAN PATENT APPLICATION**
published in accordance with Art. 153(4) EPC

(43) Date of publication:
04.03.2026 Bulletin 2026/10

(21) Application number: 24797073.4

(22) Date of filing: 24.04.2024

(51) International Patent Classification (IPC):
*B21D 22/20* (2006.01)   *B21D 22/26* (2006.01)
*B62D 25/02* (2006.01)   *B62D 25/04* (2006.01)
*B62D 25/20* (2006.01)   *C23C 26/00* (2006.01)

(52) Cooperative Patent Classification (CPC):
**C21D 1/70; B21D 22/20; B21D 22/26; B62D 25/02;
B62D 25/04; B62D 25/20; C09D 7/61; C21D 8/00;
C21D 9/0068; C23C 26/00;** C08K 3/04; C08K 3/36;
C08K 2003/2241; C08K 2003/2244;
C08K 2003/2296;                              (Cont.)

(86) International application number:
**PCT/JP2024/016110**

(87) International publication number:
**WO 2024/225327 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.04.2023 JP 2023075316

(71) Applicant: NIPPON STEEL CORPORATION
Tokyo 100-8071 (JP)

(72) Inventors:
• KIMOTO, Naoki
Tokyo 100-8071 (JP)

• **KUBO, Masahiro**
**Tokyo 100-8071 (JP)**
• **IGUCHI, Keinosuke**
**Tokyo 100-8071 (JP)**
• **YOSHIDA, Hiroshi**
**Tokyo 100-8071 (JP)**
• **IRIKAWA, Hideaki**
**Tokyo 100-8071 (JP)**
• **FUJITA, Soshi**
**Tokyo 100-8071 (JP)**
• **SUZUKI, Yuki**
**Tokyo 100-8071 (JP)**

(74) Representative: **Zimmermann & Partner
Patentanwälte mbB
P.O. Box 330 920
80069 München (DE)**

(54) **BLANK, METHOD FOR MANUFACTURING STRUCTURAL MEMBER, AND STRUCTURAL MEMBER**

(57)      A blank (20, 20A) for hot stamping includes multiple steel sheets. The multiple steel sheets are disposed to form an annular shape in plan view of the blank (20, 20A) and joined to each other. The multiple steel sheets include a first steel sheet (21) and a second steel sheet (22). The first steel sheet (21) has a smallest sheet thickness ($t_{min}$) among the multiple steel sheets. The second steel sheet (22) has a sheet thickness larger than the sheet thickness ($t_{min}$) of the first steel sheet (21). The first steel sheet (21) is configured so that an emissivity of at least one of both surfaces thereof is higher than an emissivity of both surfaces of the second steel sheet (22).

FIG. 3A

(52) Cooperative Patent Classification (CPC): (Cont.)
C21D 1/673; C21D 2221/00; C21D 2251/00

**Description**

TECHNICAL FIELD

The present disclosure relates to a blank for hot stamping. The present disclosure further relates to a production method for a structural member using the blank, and the structural member.

BACKGROUND ART

Structures such as a body of an automobile are formed of multiple structural members. A structural member is produced by press-forming a blank, for example. In order to ensure high strength and high dimensional accuracy, the structural member may be produced in a press forming method referred to as hot stamping. The hot stamping is a technique of heating a blank, which is a steel sheet, to a temperature in the austenite zone, press-forming the blank with press tooling, and quenching the blank by holding the blank in the press tooling for heat dissipation (rapid cooling).

Patent Literature 1 discloses a steel sheet (blank) for hot stamping. The steel sheet according to Patent Literature 1 has a surface-treated film having an emissivity of 60% or more at a temperature of 25°C and a wavelength of 8.0 $\mu$m on the whole of at least one surface thereof. According to Patent Literature 1, the surface of the steel sheet provided with the surface-treated film is increased in emissivity and has higher heat transfer effect through radiation. Therefore, when the steel sheet is heated for hot stamping, the steel sheet is quickly heated to a temperature equal to or higher than the $A_{c3}$ point at which transformation of a metal structure into the austenite phase occurs. In Patent Literature 1, it is described that the heating time can be reduced in this way, and the productivity of the hot-stamped member can be improved.

Patent Literature 2 discloses a method of producing a body side structural frame of an automobile from multiple blanks. According to Patent Literature 2, multiple blanks are joined to form a composite blank, and the composite blank is press-formed to produce a body side structural frame. In Patent Literature 2, hot forming (hot stamping) of the composite blank is described.

CITATION LIST

PATENT LITERATURE

Patent Literature 1: International Application Publication No. WO2022/215229
Patent Literature 2: Japanese Translation of PCT International Application Publication No. 2021-528248

SUMMARY OF INVENTION

TECHNICAL PROBLEM

In recent years, to simplify production processes for structures, integration of two or more members at the stage of a blank has been studied. For example, Patent Literature 2 discloses that a composite blank having an annular shape in plan view is subjected to hot stamping, thereby producing an annular body side structural frame including a pillar, a rocker and the like integrated with each other. However, when the composite blank includes steel sheets having different sheet thicknesses, the performance of the produced structural member may decrease. Specifically, for hot stamping, the blank is heated in a heating furnace until the microstructure thereof is austenitized, and then shaped with press tooling. However, a steel sheet having a smaller sheet thickness is more quickly cooled than a steel sheet having a larger sheet thickness. Therefore, in the part of the blank in which the steel sheet having a smaller sheet thickness is arranged, transformation to ferrite may start before the blank starts being shaped after removed from the heating furnace, and the hardenability may deteriorate. The local deterioration of the hardenability of the blank may lead to unevenness of the hardness of the structural member produced from the blank and a decrease in shock absorption performance thereof. In addition, the local deterioration of the hardenability leads to unevenness of stress in the structural member. As a result, particularly when the structural member has an annular shape, torsion is likely to occur, and the dimensional accuracy may deteriorate. The larger the annular structural member, the more marked the decrease in shock absorption performance (collision resistance performance) due to the deterioration of the hardenability or dimensional accuracy.

An object of the present disclosure is to provide a blank for hot stamping that can improve the performance of a structural member having an annular shape produced from the blank, in particular, a large structural member having an annular shape produced from the blank, that includes a steel sheet having a smaller sheet thickness than other steel sheets.

SOLUTION TO PROBLEM

A blank for hot stamping according to the present disclosure includes multiple steel sheets. The multiple steel sheets are disposed to form an annular shape in plan view of the blank and joined to each other. The multiple steel sheets include a first steel sheet and a second steel sheet. The first steel sheet has a smallest sheet thickness among the multiple steel sheets. The second steel sheet has a sheet thickness larger than the sheet thickness of the first steel sheet. The first steel sheet is configured so that an emissivity of at least one of both surfaces of the first steel sheet is higher than an emissivity of both surfaces of the second steel sheet.

ADVANTAGEOUS EFFECTS OF INVENTION

With the blank for hot stamping according to the present disclosure, when a structural member having an annular shape, in particular, a large structural member having an annular shape, that includes a steel sheet having a smaller sheet thickness than other steel sheets is produced from the blank, the performance of the structural member can be improved.

BRIEF DESCRIPTION OF THE DRAWINGS

[FIG. 1] FIG. 1 is a plan view of a structural member according to a first embodiment.
[FIG. 2] FIG. 2 is a cross-sectional view taken along the line II-II in FIG. 1.
[FIG. 3A] FIG. 3A is a schematic diagram for illustrating a production method for the structural member according to the first embodiment, showing a blank according to the first embodiment.
[FIG. 3B] FIG. 3B is a schematic diagram for illustrating the production method for the structural member according to the first embodiment, showing the blank according to the first embodiment.
[FIG. 3C] FIG. 3C is a schematic diagram for illustrating the production method for the structural member according to the first embodiment, showing the blank according to the first embodiment.
[FIG. 3D] FIG. 3D is a schematic diagram for illustrating the production method for the structural member according to the first embodiment, showing the blank according to the first embodiment.
[FIG. 3E] FIG. 3E is a schematic diagram for illustrating the production method for the structural member according to the first embodiment.
[FIG. 3F] FIG. 3F is a schematic diagram for illustrating the production method for the structural member according to the first embodiment.
[FIG. 3G] FIG. 3G is a schematic diagram for illustrating the production method for the structural member according to the first embodiment.
[FIG. 4] FIG. 4 is a cross-sectional view of the structural member produced in the production method according to the first embodiment.
[FIG. 5] FIG. 5 is a plan view of a blank according to a second embodiment.
[FIG. 6] FIG. 6 is a cross-sectional view taken along the line VI-VI in FIG. 5.
[FIG. 7] FIG. 7 is a plan view of a structural member according to the second embodiment.
[FIG. 8] FIG. 8 is a plan view of a structural member according to a variation of each embodiment.
[FIG. 9A] FIG. 9A is a diagram showing a division pattern of a structural member in a first example.
[FIG. 9B] FIG. 9B is a diagram showing another division pattern of the structural member in the first example.
[FIG. 9C] FIG. 9C is a diagram showing another division pattern of the structural member in the first example.
[FIG. 9D] FIG. 9D is a diagram showing another division pattern of the structural member in the first example.
[FIG. 9E] FIG. 9E is a diagram showing another division pattern of the structural member in the first example.
[FIG. 9F] FIG. 9F is a diagram showing another division pattern of the structural member in the first example.
[FIG. 9G] FIG. 9G is a diagram showing another division pattern of the structural member in the first example.
[FIG. 10A] FIG. 10A is a diagram showing a division pattern of a structural member in a second example.
[FIG. 10B] FIG. 10B is a diagram showing another division pattern of the structural member in the second example.
[FIG. 10C] FIG. 10C is a diagram showing another division pattern of the structural member in the second example.
[FIG. 10D] FIG. 10D is a diagram showing another division pattern of the structural member in the second example.

DESCRIPTION OF EMBODIMENTS

A blank for hot stamping according to an embodiment includes multiple steel sheets. The multiple steel sheets are disposed to form an annular shape in plan view of the blank and joined to each other. The multiple steel sheets include a first steel sheet and a second steel sheet. The first steel sheet has a smallest sheet thickness among the multiple steel sheets.

The second steel sheet has a sheet thickness larger than the sheet thickness of the first steel sheet. The first steel sheet is configured so that an emissivity of at least one of both surfaces of the first steel sheet is higher than an emissivity of both surfaces of the second steel sheet (a first configuration).

The blank according to the first configuration includes the first steel sheet having the smallest sheet thickness and the second steel sheet having a sheet thickness larger than the sheet thickness of the first steel sheet. The emissivity of at least one surface of the first steel sheet is higher than the emissivity of both surfaces of the second steel sheet. In this way, when the blank is heated for hot stamping, the heating rate of the first steel sheet, which is a thin part, can be increased. Therefore, the first steel sheet can be more quickly heated to a temperature in the austenite zone, and a longer retention time of the first steel sheet at the temperature can be ensured. Thus, the austenite grain in the first steel sheet can be coarsened. As a result, the ferrite transformation region (ferrite nose) in the CCT diagram shifts to longer times, and therefore, the transformation to ferrite in the first steel sheet after the end of heating of the blank can be delayed, and shaping of the blank can be started while the microstructure of the first steel sheet is kept in the austenite phase. That is, the hardenability of the first steel sheet having the small sheet thickness can be improved.

With the blank according to the first configuration, since the hardenability of the first steel sheet having the small sheet thickness is improved, the first steel sheet can be quenched well when shaping the blank into the structural member by hot stamping. Therefore, the hardness of the structural member is likely to be made uniform, and a local decrease in strength of the structural member can be prevented. In addition, unevenness of stress in the structural member is less likely to occur, so that even when the produced structural member has an annular shape, torsion is less likely to occur, and high dimensional accuracy can be ensured in the structural member. Therefore, when an annular structural member, in particular, a large annular structural member, that includes the first steel sheet having a smaller sheet thickness than the second steel sheet is produced from the blank, the failure in strength and the failure in dimensional accuracy of the structural member can be reduced, and the shock absorption performance (collision resistance performance) of the structural member can be improved.

With the blank according to the first configuration, the emissivity of the first steel sheet having the smallest sheet thickness is higher than the emissivity of the second steel sheet having a relatively large sheet thickness. In this case, the first steel sheet is more quickly heated than the second steel sheet, and the high temperature retention time of the first steel sheet, that is, the time from when the first steel sheet reaches a temperature in the austenite zone to when the second steel sheet and the whole of the blank reach the temperature in the austenite zone, is longer than when the first steel sheet has the same emissivity as that of the second steel sheet. Therefore, after the heating of the blank ends, unevenness of the phase transformation due to the difference in cooling rate between the steel sheets can be reduced. Specifically, the start of the phase transformation from austenite to ferrite of the first steel sheet having the smallest sheet thickness can be delayed, so that the difference in start time of phase transformation between the first steel sheet having the smallest sheet thickness and the other steel sheets is reduced. As a result, the hardenability of the first steel sheet having the smallest sheet thickness and the other steel sheets can be made uniform.

In the first configuration, the first steel sheet may have a sheet thickness of less than 1.4 mm (a second configuration).

When the sheet thickness of the first steel sheet is less than 1.4 mm as in the second configuration, the first steel sheet particularly easily dissipates heat after heating of the blank is ended, and the hardenability of the first steel sheet is likely to deteriorate. However, even when the sheet thickness of the first steel sheet is less than 1.4 mm, if the emissivity of at least one surface of the first steel sheet is higher than the emissivity of the second steel sheet having a relatively large sheet thickness, heating of the first steel sheet can be promoted and a long high temperature retention time of the first steel sheet can be ensured when the blank is heated for hot stamping. Therefore, the hardenability of the first steel sheet can be improved.

In the first or second configuration, the first steel sheet may be a plated steel sheet. In this case, the first steel sheet may have a base steel sheet and an aluminum-based plating layer provided on the base steel sheet (a third configuration).

When the first steel sheet is a plated steel sheet having an aluminum-based plating layer as in the third configuration, when the blank is heated for hot stamping, the heating rate of the first steel sheet tends to be low. The color of the aluminum-based plating layer is close to white, so that the aluminum-based plating layer tends to reflect thermal energy, which inhibits heating of the first steel sheet. However, even when the first steel sheet is a plated steel sheet having an aluminum-based plating layer, if the emissivity of at least one surface of the first steel sheet is higher than the emissivity of the second steel sheet having a relatively large sheet thickness, heating of the first steel sheet can be promoted when the blank is heated for hot stamping. Therefore, a long high temperature retention time of the first steel sheet can be ensured, and the hardenability of the first steel sheet can be improved.

In any of the first to third configurations, the at least one surface of the first steel sheet may be coated with a film having an emissivity of 60% or more at a temperature of 25°C and a wavelength of 8.0 μm (a fourth configuration).

In any of the first to third configurations, the at least one surface of the first steel sheet may be coated with a film. The film may contain carbon black, one or more oxides selected from among the group consisting of Zr oxide, Zn oxide and Ti oxide, and 0 to 0.30 g/m² silica. Provided that a content of the carbon black in the film is $X_{CB}$ (g/m²), and a content of the oxide is $X_{Oxide}$ (g/m²), $X_{CB}$ and $X_{Oxide}$ preferably satisfy the following Formula (1) (see Patent Literature 1) (a fifth configuration):

$$118.9 \leq 24280/\{6700/(100 + 76 \times X_{CB}) + 18000/(130 + 65 \times X_{Oxide})\} \leq 332.0$$

(1)

In any of the first to fifth configurations, the first steel sheet may be a plated steel sheet having a base steel sheet and a plating layer provided on the base steel sheet. In this case, provided that a sheet thickness of the first steel sheet is $t_{min}$, and a sheet thickness of a steel sheet having a largest sheet thickness among the multiple steel sheets is $t_{max}$, it is preferable that $1.0 < t_{max}/t_{min} \leq 3.2$ (a sixth configuration).

Among the multiple steel sheets included in the blank, when the difference in sheet thickness between the first steel sheet having the smallest sheet thickness $t_{min}$ and another steel sheet having the largest sheet thickness $t_{max}$ is large, a process window is difficult to ensure in production of the structural member. For example, when the difference between the smallest sheet thickness $t_{min}$ and the largest sheet thickness $t_{max}$ is large, when the blank is heated for hot stamping, alloying of the plating layer of the first steel sheet having been heated earlier to a temperature in the austenite zone may proceed and the diffusion layer may become thicker while waiting for the steel sheet having the largest sheet thickness $t_{max}$ to reach the temperature in the austenite zone, and thus, the corrosion resistance or the weldability of the plating layer of the first steel sheet may be unable to be ensured. In view of this, according to the sixth configuration, the ratio of the largest sheet thickness $t_{max}$ to the smallest sheet thickness $t_{min}$ is set to be 3.2 or less. In this way, the heating rate of the steel sheet having the largest sheet thickness $t_{max}$ and the heating rate of the first steel sheet having the smallest sheet thickness $t_{min}$ are not excessively different, so that the heating of the other steel sheets can be ended before alloying of the plating layer of the first steel sheet excessively proceeds. Therefore, the structural member can be produced while maintaining the corrosion resistance or the weldability of the first steel sheet, and a process window can be ensured in the production of the structural member.

In any of the first to sixth configurations, the first steel sheet may be a plated steel sheet having a base steel sheet and a plating layer provided on the base steel sheet. The blank may further include an overlap part. The overlap part is formed by end parts of adjacent two steel sheets other than the second steel sheet among the multiple steel sheets overlaid on one another. The overlap part may have a total sheet thickness of 2.5 mm or more and 4.0 mm or less. In this case, each of the two steel sheets is preferably configured so that an emissivity of a surface located on an outer side of the overlap part is higher than the emissivity of both surfaces of the second steel sheet (a seventh configuration).

When the blank includes an overlap part formed by end parts of two steel sheets overlaid on one another, the process window may be unable to be ensured in the production of the structural member. Specifically, in the case where the multiple steel sheets included in the blank have different sheet thicknesses, and the total sheet thickness of the overlap part is more than 2.5 mm, when the blank is heated for hot stamping, alloying of the plating layer of the first steel sheet having the smallest sheet thickness may proceed and the diffusion layer may become thicker while waiting for the overlap part to reach a temperature in the austenite zone, and thus, the corrosion resistance or the weldability of the first steel sheet may be unable to be ensured due to the plating layer. In view of this, according to the seventh configuration, in each of the two steel sheets forming the overlap part, the emissivity of the surface located on the outer side of the overlap part is increased. In this way, heating of the overlap part can be promoted, so that the heating of the overlap part can be ended before alloying of the plating layer of the first steel sheet excessively proceeds, and the structural member can be produced while the corrosion resistance or the weldability of the first steel sheet are maintained. That is, a process window is more likely to be ensured in the production of the structural member. However, even if the emissivity of the overlap part is increased, the process window is difficult to ensure if the total sheet thickness of the overlap part is too large. Therefore, the total sheet thickness of the overlap part is preferably 4.0 mm or less.

A production method for a structural member according to an embodiment includes a step of preparing the blank according to any one of the first to seventh configurations, a step of heating the multiple steel sheets included in the blank to an austenite transformation completion temperature or higher, and a step of shaping and quenching the heated blank into a structural member having an annular shape in plan view with press tooling (an eighth configuration).

A structural member according to an embodiment includes a member main body and a film. The member main body is formed of multiple steel sheets joined to each other and has an annular shape in plan view. The multiple steel sheets include a first steel sheet having a smallest sheet thickness and a second steel sheet having a sheet thickness larger than the sheet thickness of the first steel sheet. The film is provided on the first steel sheet. The film contains 0.001 g/m² or more of one or more oxides selected from among the group consisting of Zr oxide, Zn oxide and Ti oxide (a ninth configuration).

A structural member according to an embodiment includes a member main body and a film. The member main body is formed of multiple steel sheets joined to each other and has an annular shape in plan view. The multiple steel sheets include a first steel sheet having a smallest sheet thickness and a second steel sheet having a sheet thickness larger than the sheet thickness of the first steel sheet. The film is provided on the first steel sheet. The film contains 0.500 g/m$^2$ or less carbon black (a tenth configuration).

In the ninth or tenth configuration, the structural member may be a door ring part of an automobile. In this case, the member main body may include a front pillar, a center pillar and a rocker that connects the front pillar and the center pillar to each other (an eleventh configuration).

In the following, embodiments of the present disclosure will be described with reference to the drawings. In the drawings, the same or corresponding components are denoted by the same reference numerals, and redundant descriptions will be omitted.

<First Embodiment>

[Structural Member]

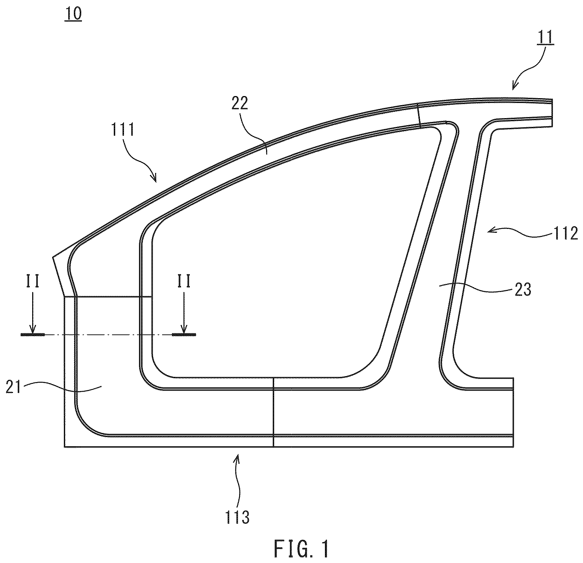

FIG. 1 is a diagram (plan view) showing a structural member 10 according to a first embodiment placed on a horizontal surface viewed from above. The structural member 10 is used for a body of an automobile, for example. The structural member 10 is typically a door ring part of an automobile. This embodiment will be described with reference to an example in which the structural member 10 is a door ring part.

The structural member 10 is a hot-stamped member. That is, the structural member 10 is produced by performing hot stamping (hot press working) on a blank formed of multiple steel sheets. The structural member 10 includes a member main body 11. The member main body 11 has an annular shape in plan view of the structural member 10. The member main body 11 includes a front pillar 111, a center pillar 112 and a rocker 113. When the structural member 10 is assembled to the body of the automobile, the center pillar 112 is disposed rearward of the front pillar 111. The center pillar 112 generally extends in the up-and-down direction of the body. The front pillar 111 extends toward the center pillar 112. When the structural member 10 is assembled to the body of the automobile, the rocker 113 is disposed below the front pillar 111 and the center pillar 112. The rocker 113 connects the front pillar 111 and the center pillar 112 to each other.

In this embodiment, the member main body 11 is formed of multiple steel sheets 21, 22 and 23 joined to each other. In the example in FIG. 1, the front pillar 111 is mainly formed of the steel sheets 21 and 22. The center pillar 112 is mainly formed of the steel sheet 23. The rocker 113 is formed of the steel sheets 21 and 23.

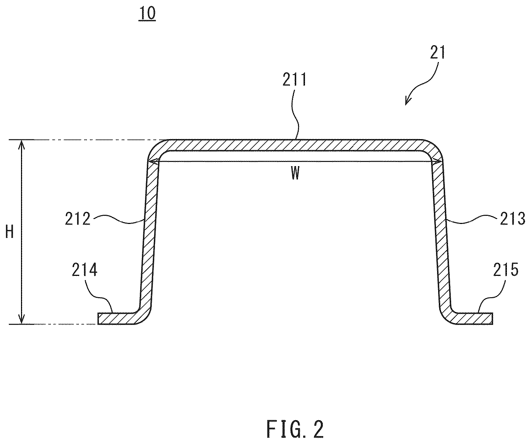

FIG. 2 is a cross-sectional view taken along the line II-II in FIG. 1. FIG. 2 shows a cross section of the structural member 10 taken at the position of the steel sheet 21 along the sheet thickness direction thereof. As shown in FIG. 2, the steel sheet 21 has an open cross section. The steel sheet 21 has a generally hat-like shaped in cross-sectional view of the structural member 10, for example. More specifically, the steel sheet 21 includes a top plate 211, vertical walls 212 and 213 and flanges 214 and 215. The vertical wall 212 is disposed on the opposite side of the top plate 211 to the vertical wall 213. In the cross-sectional view of the structural member 10, one ends of the vertical walls 212 and 213 are connected to the top plate 211. In the cross-sectional view of the structural member 10, the other ends of the vertical walls 212 and 213 are connected to the flanges 214 and 215, respectively. The flanges 214 and 215 project outward from the vertical walls 212 and 213 of the structural member 10, respectively.

In the structural member 10, a width W of the steel sheet 21 may be 30 mm or more and 750 mm or less. A height H of the steel sheet 21 may be 25 mm or more and 150 mm or less. The width W is the distance from the R-end on the vertical wall 212 side of the corner part between the top plate 211 and the vertical wall 212 to the R-end on the vertical wall 213 side of the corner part between the top plate 211 and the vertical wall 213, in the cross section of the structural member 10. The height H is the distance from the top plate 211 to the flange 214 or 215 in the sheet thickness direction of the top plate 211.

Although not shown, the other steel sheets 22 and 23 have an open cross section, as with the steel sheet 21. The steel sheets 22 and 23 can also have a generally hat-like shaped in cross-sectional view of the structural member 10. The width of each of the steel sheets 22 and 23 may be 15 mm or more and 300 mm or less. The height of each of the steel sheets 22 and 23 may be 10 mm or more and 150 mm or less.

The size of the structural member 10 having an annular shape in plan view is 1.0 m or more, for example. The size of the structural member 10 may be 4.0 m or less, for example. The size of the structural member 10 means the length of the line segment connecting two points that are the most distant from each other among any two points on the outer circumference of the structural member 10 when the structural member 10 placed on a horizontal surface is viewed in the vertical direction.

[Production Method for Structural Member]

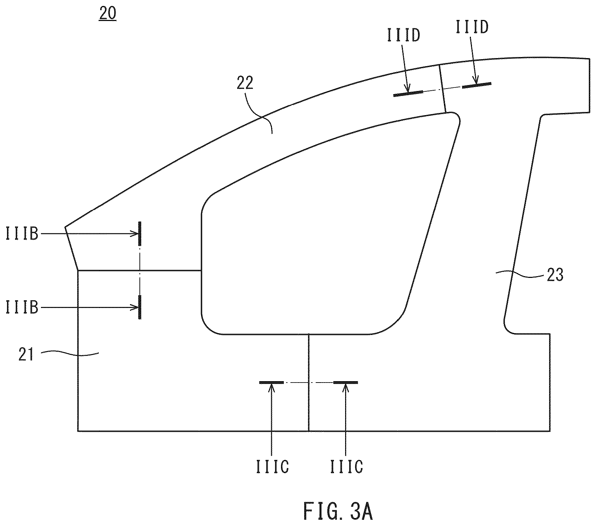

In the following, a production method for the structural member 10 will be described with reference to FIGS. 3A to 3G. The production method for the structural member 10 according to this embodiment includes a step of preparing a blank 20, a step of heating the blank 20 and a step of shaping the heated blank 20 into the structural member 10.

(Preparation Step)

As shown in FIG. 3A, in the preparation step, a blank 20 having the expanded shape of the structural member 10 is prepared. The blank 20 includes multiple steel sheets 21, 22 and 23. The steel sheets 21, 22 and 23 are disposed to form an annular shape in plan view of the blank 20 and joined to each other.

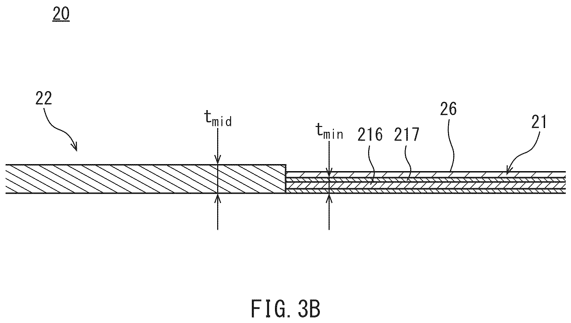

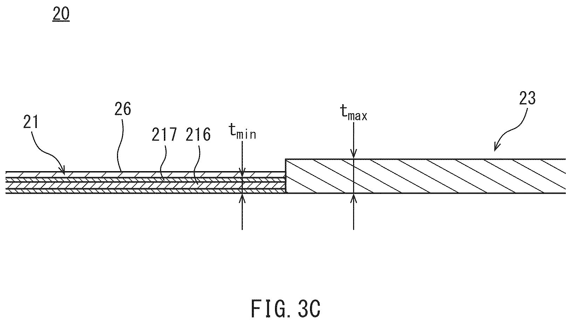

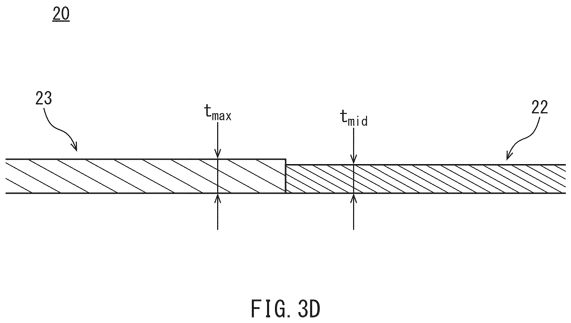

FIGS. 3B, 3C and 3D are cross-sectional views of the blank 20, showing junctures between the steel sheets 21, 22 and 23. FIGS. 3B, 3C and 3D are cross-sectional views taken along the lines IIIB-IIIB, IIIC-IIIC and IIID-IIID in FIG. 3A, respectively. With reference to FIGS. 3B and 3C, the steel sheet 21 is butt-joined to each of the steel sheets 22 and 23. That is, an end face of the steel sheet 21 abuts on and is joined to an end face of the steel sheet 22, and another end face of the steel sheet 21 abuts on and is joined to an end face of the steel sheet 23. With reference to FIG. 3D, the steel sheet 22 is butt-joined not only to the steel sheet 21 but also to the steel sheet 23. An end face of the steel sheet 22 abuts on and is joined to an end face of the steel sheet 23. The steel sheets 21, 22 and 23 are joined to each other by laser welding, for example. In this embodiment, the blank 20 is a so-called tailor welded blank.

With reference to FIGS. 3B and 3C, among the steel sheets 21, 22 and 23, the steel sheet 21 has the smallest sheet thickness $t_{min}$. The steel sheet 22 has a sheet thickness larger than the sheet thickness $t_{min}$ of the steel sheet 21. The steel sheet 23 has a sheet thickness equal to or larger than the sheet thickness $t_{min}$ of the steel sheet 21. In the example of this embodiment, the steel sheets 22 and 23 each have a sheet thickness larger than the sheet thickness $t_{min}$ of the steel sheet 21. In this embodiment, the steel sheet 23 has the largest sheet thickness $t_{max}$ among the steel sheets 21, 22 and 23. The steel sheet 22 has a sheet thickness $t_{mid}$ larger than the sheet thickness $t_{min}$ of the steel sheet 21 and smaller than the sheet thickness $t_{max}$ of the steel sheet 23. However, the steel sheet 22 may have a sheet thickness equal to or larger than the sheet thickness of the steel sheet 23. That is, the steel sheet 22 may have the largest sheet thickness $t_{max}$ among the steel sheets 21, 22 and 23.

The sheet thickness $t_{min}$ of the steel sheet 21 is typically less than 1.4 mm. The sheet thickness $t_{min}$ may be 0.8 mm or more, for example. The sheet thickness $t_{min}$ of the steel sheet 21 and the sheet thickness $t_{max}$ of the steel sheet 23 preferably satisfy a condition that $1.0 < t_{max}/t_{min} \leq 3.2$, and more preferably satisfy a condition that $1.3 \leq t_{max}/t_{min} \leq 3.2$.

The steel sheet 21 having the smallest sheet thickness $t_{min}$ in the blank 20 is configured so that the emissivity of at least one of both surfaces thereof is higher than the emissivity of both surfaces of the steel sheet 22. For example, at a temperature of 25°C and a wavelength of 8.0 $\mu$m, the emissivity of one or both of the surfaces of the steel sheet 21 is 60% or more, whereas the emissivity of both surfaces of the steel sheet 22 is less than 60%. The emissivity of one or both of the surfaces of the steel sheet 21 at a temperature of 25°C and a wavelength of 8.0 $\mu$m is preferably 70% or more, and more preferably 80% or more. The difference in emissivity at a temperature of 25°C and a wavelength of 8.0 $\mu$m between the steel sheet 21 having the smallest sheet thickness $t_{min}$ and the steel sheet 22 is preferably more than 5%, more preferably more than 10%, and even more preferably more than 20%. The emissivity can be measured according to JIS R 1801 (2002). In this case, a specimen taken from the steel sheet to be measured is set in a Fourier transform infrared spectrophotometer, and the radiation intensity is measured at a temperature of 25°C and a wavelength of 8.0 $\mu$m to calculate the emissivity. Alternatively, a radiation thermometer may be used, the measurement wavelength thereof may be set at 8.0 $\mu$m, the radiation intensity of an involved region may be measured at 25°C, and the emissivity may be calculated from the ratio of the radiation intensity to the radiation intensity of a blackbody.

In this embodiment, one surface of the steel sheet 21 is coated with a film 26. On the other hand, the steel sheet 22 is not provided with the film 26. In this way, the emissivity of the one surface of the steel sheet 21 is higher than the emissivity of both surfaces of the steel sheet 22.

The film 26 is a film that is black in color, for example. For example, when the lightness L* value of the surface of the film 26 (CIE 1976 lightness index L* defined in JIS Z8781-4(2013)) is 60 or less, the film 26 can be determined to be black in color. The film 26 may be a surface-treated carbon-based film (a film containing carbon (C)). The emissivity of the film 26 at a temperature of 25°C and a wavelength of 8.0 $\mu$m is 60% or more, preferably 70% or more, and more preferably 80% or more. That is, the emissivity of the surface of the steel sheet 21 provided with the film 26 at a temperature of 25°C and a wavelength of 8.0 $\mu$m is 60% or more, preferably 70% or more, and more preferably 80% or more. The film 26 may have an emissivity of 60% or more at a temperature of 700°C and a wavelength of 8.0 $\mu$m. As the film 26, a surface-treated film described in Patent Literature 1 may be used, for example. Specifically, the film 26 may contain carbon black and one or more oxides selected from among the group consisting of Zr oxide, Zn oxide and Ti oxide. The film 26 may or may not contain silica. In other words, the content of silica in the film 26 is 0 g/m$^2$ or more. The content of silica in the film 26 may be 0.30 g/m$^2$ or less. The content of silica is more preferably 0.10 g/m$^2$ or less, and more preferably 0.05 g/m$^2$ or less.

The carbon black and the oxide may be dispersed over the whole of a surface of the film 26 that is perpendicular to the sheet thickness direction of the steel sheet 21. Provided that the content of carbon black is $X_{CB}$ (g/m$^2$), and the content of the one or more oxides (metal oxides) selected from among the group consisting of Zr oxide, Zn oxide and Ti oxide is $X_{Oxide}$ (g/m$^2$), $X_{CB}$ and $X_{Oxide}$ preferably satisfy the following Formula (1).

$$118.9 \leq 24280/\{6700/(100 + 76 \times X_{CB}) + 18000/(130 + 65 \times X_{Oxide})\} \leq 332.0$$

$$(1)$$

In Formula (1), the value calculated by the middle term: $24280/\{6700/(100 + 76 \times X_{Oxide})\}$ is preferably 119.0 or more, more preferably 170.0 or more, and even more preferably 220.0 or more. The value calculated by the middle term is preferably 330.0 or less, more preferably 310.0 or less, and even more preferably 300.0 or less.

The dispersion state of the carbon black and the metal oxide in the film 26 can be checked by surface analysis of the film 26 in terms of an element (such as C) deriving from carbon black or an element (such as Zr, Zn or Ti) deriving from the oxide with an electron probe micro analyzer (EPMA). The content $X_{CB}$ of carbon black can be measured by cross-sectional analysis of the film 26 with a transmission electron microscope (TEM). Specifically, cross-sectional analysis of a region of the film 26 having a predetermined size (film thickness of the film $26 \times 5 \mu m$) is performed by TEM-EDS analysis, and the film thickness of the film 26 and the area fraction of particles having a carbon content of 70 mass% or more in the region are measured. Provided that the density of carbon black is $\rho$ (ton/m$^3$), the film thickness is d ($\mu$m) and the area fraction is a (%), the value of $\rho \times d \times a$ is the content $X_{CB}$ (g/m$^2$) of carbon black. The content $X_{Oxide}$ of the oxide can be determined by performing element analysis of the surface of the film 26 using an X-ray fluorescence spectrometer (ZSX Primus available from RIGAKU Holdings Corporation) and quantifying the metal Zr, Zn and Ti.

The content $X_{CB}$ of carbon black in the film 26 is preferably 0.030 g/m$^2$ or more, and more preferably 0.100 g/m$^2$ or more. Although the content $X_{CB}$ can be set in any range that satisfies Formula (1), the content $X_{CB}$ is preferably 0.800 g/m$^2$ or less, and more preferably 0.600 g/m$^2$ or less.

The film 26 may contain 5.0 or more carbon black in vol%, and preferably contains 8.0 or more carbon black in vol%. Furthermore, the film 26 may contain 40.0 or less carbon black in vol%, and preferably contains 30.0 or less carbon black in vol%.

The content $X_{Oxide}$ of the metal oxide in the film 26 is preferably 0.030 g/m$^2$ or more, and more preferably 0.060 g/m$^2$ or more. Although the content $X_{Oxide}$ can be set in any range that satisfies Formula (1), the content $X_{Oxide}$ is preferably 0.500 g/m$^2$ or less, and more preferably 0.300 g/m$^2$ or less.

The film 26 may contain 1.0 or more metal oxide in vol%. Furthermore, the film 26 may contain 30.0 or less metal oxide in vol%, and preferably contains 25.0 or less metal oxide in vol%.

The ratio between the content $X_{CB}$ (g/m$^2$) of carbon black and the content $X_{Oxide}$ (g/m$^2$) of metal oxide: $X_{Oxide}/X_{CB}$ is preferably 0.20 or more and 200.00 or less. $X_{Oxide}/X_{CB}$ is more preferably 0.40 or more and 10.00 or less, and more preferably 0.60 or more and 5.00 or less.

The film 26 may contain various kinds of binder components or addition agents, in addition to the carbon black and the metal oxides described above.

The binder component is preferably a water-dispersible or water-soluble resin. The content of the binder component is preferably 40 vol% or more of the overall volume of the film 26. As the binder component selected from among water-dispersible or water-soluble resins, various kinds of well-known resins that exhibit water dispersibility or water solubility can be used. Such resins that exhibit water dispersibility or water solubility include polyurethane resin, polyester resin, acrylic resin, epoxy resin, fluororesin, polyamide resin, polyolefin resin, and polymer compounds obtained by hydrolysis and condensation polymerization of silane coupling agents, for example. The binder component is more preferably one or more, or two or more selected from among the group consisting of polyester resin, polyurethane resin, polyolefin resin, acrylic resin, epoxy resin, fluororesin and polyamide resin. When polyurethane resin is used as the binder component, the polyurethane resin is preferably polyether-based polyurethane resin.

The addition agent is a leveling agent, a water-soluble solvent, a metal stabilizer or an etching inhibitor, for example. The leveling agent is a nonionic or cationic surface-active agent, for example. The nonionic or cationic surface-active agent may be a polyethylene oxide or polypropylene oxide adduct, or an acetylene glycol compound, for example. The water-soluble solvent may be an alcohol such as ethanol, isopropyl alcohol, t-butyl alcohol or propylene glycol, a cellosolve such as ethylene glycol monobutyl ether or ethylene glycol monoethyl ether, an ester such as ethyl acetate or butyl acetate, or a ketone such as acetone, methyl ethyl ketone or methyl isobutyl ketone, for example. The metal stabilizer may be a chelate compound such as ethylenediaminetetraacetic acid (EDTA) or diethylenetriaminepentaacetic acid (DTPA), for example. The etching inhibitor may be an amine compound such as ethylenediamine, triethylenepentamine, guanidine or pyrimidine, for example.

The film 26 can be formed by applying an organic or inorganic processing liquid containing carbon black and a metal oxide to the whole of the surface of the steel sheet 21 and then drying the volatile constituents in the processing liquid. The processing liquid can be applied to the surface of the steel sheet 21 with a roll coater, a curtain coater or an ink jet, for example. In the case of the ink jet, the film thickness of the film 26 can be continuously varied. The film thickness of the film 26 is 0.5 $\mu$m or more and 5.0 $\mu$m or less, for example. The film thickness of the film 26 is preferably 1.0 $\mu$m or more and 3.0 $\mu$m or less. The film thickness of the film 26 is small enough to be negligible compared with the sheet thickness $t_{min}$ of the

steel sheet 21. Therefore, the measured sheet thickness of the steel sheet 21 including the film 26 can be treated as the sheet thickness $t_{min}$ of the steel sheet 21.

The steel sheet 21 may be a plated steel sheet. In that case, the steel sheet 21 includes a base steel sheet 216 and a plating layer 217. The type of the base steel sheet 216 is not particularly limited. The plating layer 217 is provided on the base steel sheet 216. The plating layer 217 covers the whole or substantially the whole of both surfaces of the base steel sheet 216. The plating layer 217 is a metal plating layer. The plating layer 217 may be a molten aluminum plating or may be a molten zinc plating, a galvannealed plating or an electrogalvanized plating, for example. As the steel sheet 21, a well-known aluminum-plated steel sheet or zinc-plated steel sheet, for example can be used.

The plating layer 217 is typically a plating layer (aluminum-based plating layer) primarily containing aluminum. The configuration of the aluminum-based plating layer is not particularly limited. As the plating layer 217, a well-known aluminum-based plating layer can be used. When the steel sheet 21 is a plated steel sheet, the sheet thickness $t_{min}$ of the steel sheet 21 is the total sheet thickness of the base steel sheet 216 and the plating layer 217.

The steel sheets 22 and 23 may be a well-known plated steel sheet, as with the steel sheet 21. The steel sheets 22 and 23 may be an aluminum-plated steel sheet or a zinc-plated steel sheet. The steel sheets 22 and 23 may be the same type of plated steel sheet as the steel sheet 21 or may be a different type of plated steel sheet than the steel sheet 21. Furthermore, the steel sheet 22 may be the same type of plated steel sheet as the steel sheet 23 or may be a different type of plated steel sheet than the steel sheet 23. When the steel sheet 22 is a plated steel sheet, the sheet thickness $t_{mid}$ of the steel sheet 22 is the total sheet thickness of the base steel sheet and the plating layer. Similarly, when the steel sheet 23 is a plated steel sheet, the sheet thickness $t_{max}$ of the steel sheet 23 is the total sheet thickness of the base steel sheet and the plating layer. When two or more of the steel sheets 21, 22 and 23 are plated steel sheets, the base weight of the plating of each steel sheet may be the same as that of the other steel sheets or may be different from that of the other steel sheets.

(Heating Step)

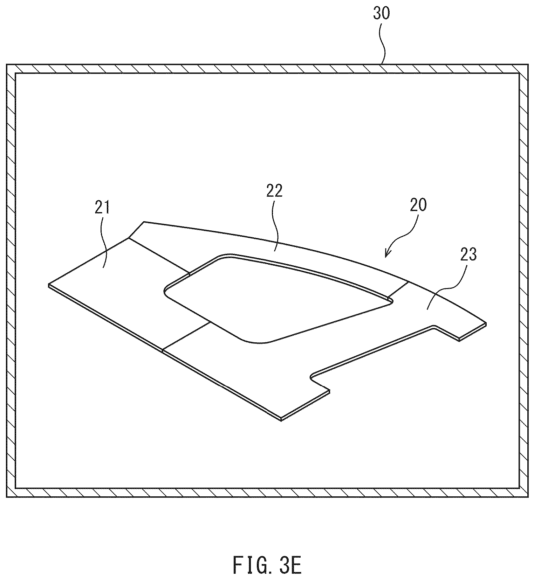

The prepared blank 20 is shaped into the structural member 10 (FIGS. 1 and 2) through hot stamping (hot press working). For the hot stamping, the blank 20 is subjected to the heating step. With reference to FIG. 3E, in the heating step, the blank 20 is heated in a heating furnace 30, for example. The multiple steel sheets 21, 22 and 23 included in the blank 20 are heated to an austenite transformation completion temperature ($A_{c3}$ point) or higher. The steel sheets 21, 22 and 23 are heated to 900°C or more, for example. In this way, the whole or substantially the whole of the microstructure of the steel sheets 21, 22 and 23 is transformed into the austenite phase, for example.

(Shaping Step)

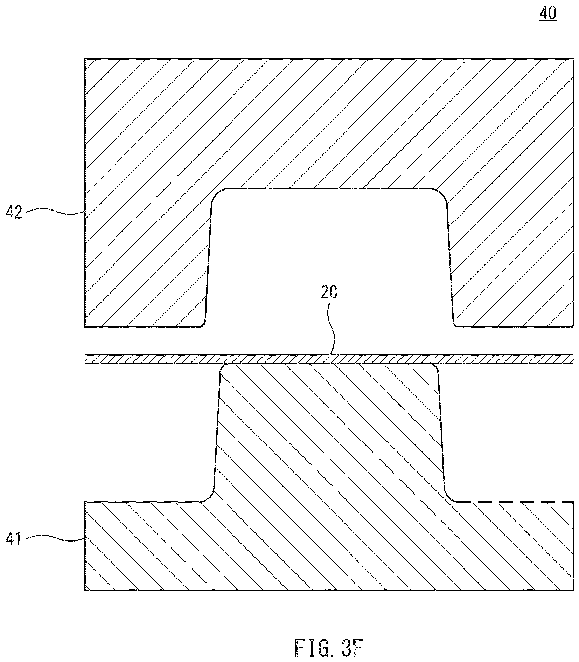

With reference to FIG. 3F, in the shaping step, using press tooling 40, the heated blank 20 is shaped into the structural member 10 having an annular shape in plan view (FIGS. 1 and 2) and quenched. The blank 20 heated in the heating step is removed from the heating furnace 30 (FIG. 3E) and conveyed to the press tooling 40. The press tooling 40 is attached to a well-known pressing device. The press tooling 40 includes a punch 41 and a die 42, for example. The blank 20 is placed between the punch 41 and the die 42.

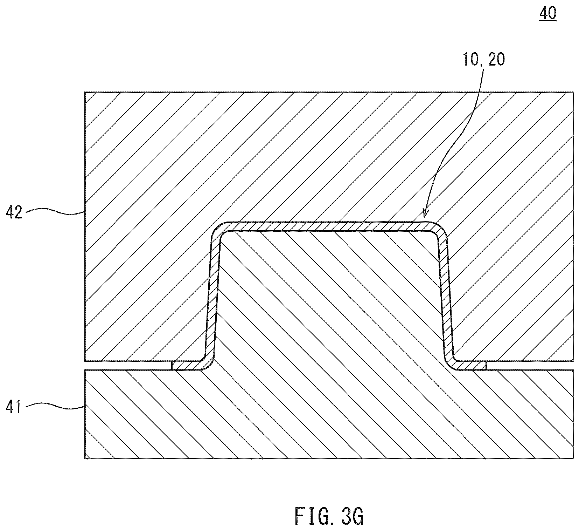

With reference to FIG. 3G, after the blank 20 is placed between the punch 41 and the die 42, the die 42 comes relatively closer to the punch 41. The blank 20 is sandwiched (pressed) between the punch 41 and the die 42 and formed into a shape conforming to the shaping surfaces of the punch 41 and the die 42. The blank 20 is kept being sandwiched between the punch 41 and the die 42. The blank 20 is made to dissipate heat (rapid cooling) in the press tooling 40, and thereby the microstructure thereof is transformed into martensite. In this way, the structural member 10 can be produced from the blank 20.

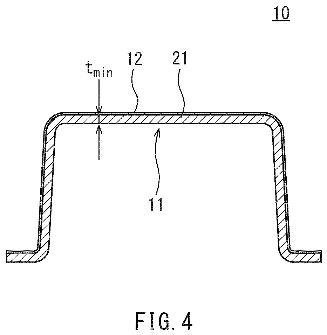

FIG. 4 is a cross-sectional view of the structural member 10 after hot stamping. FIG. 4 shows a cross section of the structural member 10 at the position of the steel sheet 21 (FIGS. 3B and 3C) that is provided with the film 26 that is black in color at the stage of the blank 20. The structural member 10 includes the member main body 11 and a film 12. The film 12 is provided on the steel sheet 21. The film 26 (FIGS. 3B and 3C) that is black in color provided to the steel sheet 21 of the blank 20 is changed into the film 12 through hot stamping. When the film 26 contains carbon black, the carbon black substantially disappears while heated at high temperature for hot stamping, although some of the carbon black may remain on the member main body 11. When the film 26 before hot stamping satisfies Formula (1) described above, the film 12 after hot stamping may not contain carbon black or may contain $0.500\ \mathrm{g/m^2}$ or less carbon black. When the film 12 after hot stamping contains carbon black, the content of carbon black in the film 12 is more than $0\ \mathrm{g/m^2}$. Furthermore, when the film 26 before hot stamping satisfies Formula (1) described above, the value calculated by the middle term: $24280/\{6700/(100 + 76 \times X_{CB}) + 18000/(130 + 65 \times X_{Oxide})\}$ for the film 12 after hot stamping is 120.0 or more and 150.0 or less.

When the film 26 (FIGS. 3B and 3C) before hot stamping satisfies Formula (1) described above, the film 12 after hot stamping contains more than $0\ \mathrm{g/m^2}$, for example, or more preferably $0.001\ \mathrm{g/m^2}$ or more, of one or more oxides (metal oxides) selected from among the group consisting of Zr oxide, Zn oxide and Ti oxide. The content of the metal oxide in the film 12 is 0.500 g/m$^2$ or less, for example. When the metal oxide remains in the structural member 10 in this way, that is, when the film 12 contains more than 0 g/m$^2$ of metal oxide, the corrosion resistance of the structural member 10 is advantageously improved. When the film 26 before hot stamping satisfies Formula (1) described above, the film 12 after hot stamping contains 0 to 0.30 g/m$^2$ silica.

The contents of carbon black, metal oxide and silica in the film 12 can be measured in the same manner as the film 26 at the stage of the blank 20. Specifically, an automobile body part is disassembled to obtain the annular structural member 10, and an analysis specimen is obtained from the structural member 10 by laser cutting, for example. For example, an analysis specimen is obtained from each of the multiple steel sheets included in the structural member 10. The analysis specimen is taken from a center part or a vicinity thereof of the top plate of each of the steel sheets having an open cross section. The analysis specimen obtained is adjusted by polishing the cut surface to a region outside of the region affected by the heat of laser cutting, for example, thereby preparing a film analysis specimen. Using this specimen, surface analysis of the film 12 can be performed by EPMA in terms of an element (such as C) deriving from carbon black or an element (such as Zr, Zn or Ti) deriving from the oxide, thereby checking the dispersion state of the carbon black or metal oxide in the film 12.

For example, an electrodeposited film or the like often exists in the outermost layer of the structural member 10. In such a case, a film layer that exists under the electrodeposited film layer and above the alloyed metal plating layer is analyzed. The content $X_{CB}$ of carbon black in the film 12 can be measured by cross-sectional analysis of the film 26 using TEM. Specifically, cross-sectional analysis of a region of the film 12 having a predetermined size (film thickness of the film $12 \times 5 \, \mu m$) is performed by TEM-EDS analysis, and the film thickness of the film 12 and the area fraction of particles having a carbon content of 70 mass% or more in the region are measured. Provided that the density of carbon black is $\rho$ (ton/m$^3$), the film thickness is d ($\mu m$), and the area fraction is a (%), the value of $\rho \times d \times a$ is the content $X_{CB}$ (g/m$^2$) of carbon black. The content $X_{Oxide}$ of the oxide can be determined by performing element analysis of the film layer that exists under the electrodeposited film layer and above the alloyed metal plating layer using the X-ray fluorescence spectrometer described above and quantifying the metal Zr, Zn and Ti.

In the cross section of the structural member 10 at the position of the steel sheet 21 having the smallest sheet thickness $t_{min}$, the variation in martensite fraction is 20 % or less, for example, provided that a value obtained by subtracting the minimum martensite fraction (%) from the maximum martensite fraction (%) is defined as the variation in martensite fraction. The variation in martensite fraction is preferably 15% or less, and more preferably 10% or less. The variation in martensite fraction can be measured as follows. That is, in the cross section of the structural member 10 at the position of the steel sheet 21 having the smallest sheet thickness $t_{min}$, ten or more analysis samples (a longer side of which has a length of the order of 10 mm, for example) are cut at positions distant from the ends by 20 mm or more and spaced apart from each other by 10 mm or more, and each analysis sample is mirror-polished and etched with the LePera etchant so that the surface in the sheet thickness direction is an observation surface. Then, the structure at the depth of 1/4 of the sheet thickness from the steel sheet surface (that is, in the region from the depth of 1/8 of the sheet thickness from the steel sheet surface to the depth of 3/8 of the sheet thickness from the steel sheet surface) is photographed with an optical microscope with a magnification of 1000 in thirty visual fields each having structure micrographs of 2400 $\mu m^2$ or more, and the structure photographs obtained are subjected to image analysis.

In an image analysis method, a maximum lightness value Lmax and a minimum lightness value Lmin of the image are obtained from the image, any part having a pixel whose lightness ranges from Lmax-0.3 (Lmax-Lmin) to Lmax is defined as a white region, and the ratio of the number of pixels of the white regions to the total number of pixels is calculated, thereby measuring the martensite fraction. For a total of thirty observation visual fields for each analysis sample, the martensite fraction is determined by this image analysis, and a mean value thereof is regarded as the martensite fraction of the analysis sample. Furthermore, the difference between the maximum value and the minimum value of the martensite fractions of ten or more analysis samples is defined as a variation in martensite fraction in the cross section of the structural member 10 at the position of the steel sheet 21 having the smallest sheet thickness $t_{min}$. When the structural member 10 has multiple steel sheets having the smallest sheet thickness $t_{min}$, this analysis is performed to determine the martensite fraction for each of these steel sheets, and the maximum variation in martensite fraction among these steel sheets is regarded as the variation in martensite fraction of the structural member 10.

Note that in some steel sheets, the area ratio of martensite obtained by the image analysis, that is, the area ratio of the white region, may include several percent of the area ratio of the retained austenite. However, the influence is small, since the variation in martensite fraction is calculated as a difference.

After the shaping step (hot stamping), the steel sheet 21 can have a tensile strength of 0.5 GPa or more, for example, and preferably has a tensile strength of 1.0 GPa or more. Similarly, after the shaping step (hot stamping), the steel sheets 22 and 23 (FIG. 1) can have a tensile strength of 0.5 GPa or more, for example, and preferably has a tensile strength of 1.0 GPa or more. At least one of the steel sheets 21, 22 and 23 may have a tensile strength of 1.5 GPa or more after the shaping step. The tensile strength of each of the steel sheets 21, 22 and 23 may be the same as or different from the tensile strengths of the other steel sheets.

[Effects]

With the blank 20 according to this embodiment, the emissivity of one surface of the steel sheet 21 having the smallest sheet thickness $t_{min}$ is higher than the emissivity of both surfaces of the steel sheet 22 having a larger sheet thickness. That is, the surface of the steel sheet 21 is subjected to a treatment for increasing the emissivity. Therefore, when the blank 20 is heated for hot stamping, the heating rate of the steel sheet 21 is markedly higher than the heating rate of the steel sheet 22. Therefore, in the heating step, the steel sheet 21 can be quickly heated to a temperature in the austenite zone, and a long high temperature retention time of the steel sheet 21 can be ensured. As a result, the austenite grain in the microstructure of the steel sheet 21 is coarsened, and the ferrite transformation region (ferrite nose) in the CCT diagram shifts to longer times. Therefore, the transformation from austenite to ferrite in the steel sheet 21 can be prevented in the period from the removal of the steel sheet 21 from the heating furnace 30 to the start of the shaping with the press tooling 40. Therefore, the shaping of the blank 20 with the press tooling 40 can be started while the microstructure of the steel sheet 21 is kept in the austenite phase, and the hardenability of the steel sheet 21 having the smallest sheet thickness $t_{min}$ can be improved.

In this embodiment, since the hardenability of the steel sheet 21 having a relatively small thickness is improved, the hardness of the structural member 10 produced from the blank 20 can be made uniform. More specifically, even the steel sheet 21 having the smallest sheet thickness $t_{min}$ is quenched well, and therefore, the variation in martensite fraction of the steel sheet 21 can be reduced to 20 % or less. As a result, deformation concentration is less likely to occur when an impact load is applied to the structural member 10, for example, and the structural member 10 is more likely to exert high shock absorption performance. Therefore, even when an annular structural member 10, in particular, a large annular structural member 10, that includes a steel sheet 21 having a small sheet thickness is produced from the blank 20, the failure in strength of the structural member 10 can be reduced, and the shock absorption performance of the structural member 10 can be improved.

The smaller the variation in martensite fraction, the more uniform the mechanical characteristics in the structural member 10, so that smaller variations in martensite fraction are preferable from the viewpoint of functionality of the structural member 10. On the other hand, if the variation in martensite fraction is large, it means that poorly hardened parts, that is, low hardness parts, are unevenly distributed in the structural member 10, and deformation is likely to be concentrated in the poor hardness parts at the time of collision deformation of the structural member 10, so that the functionality of the structural member 10 deteriorates.

In this embodiment, since the hardenability of the steel sheet 21 having a relatively small thickness is improved, unevenness of stress in the structural member 10 is also less likely to occur. Therefore, even when the annular structural member 10 is produced from the annular blank 20, torsion is less likely to occur in the structural member 10. Therefore, even when an annular structural member 10, in particular, a large annular structural member 10, that includes a steel sheet 21 having a small sheet thickness is produced from the blank 20, the failure in dimensional accuracy of the structural member 10 can be reduced, and the shock absorption performance of the structural member 10 can be improved.

With the blank 20 according to this embodiment, a surface of the steel sheet 21 having the smallest sheet thickness $t_{min}$ is coated with the film 26 that is substantially black in color, whereas the steel sheet 22 having a larger sheet thickness than the steel sheet 21 is not provided with the film 26. Therefore, the emissivity of the surface of the steel sheet 21 is higher than the emissivity of both surfaces of the steel sheet 22. In this case, the steel sheet 21 is more quickly heated than the steel sheet 22, the high temperature retention time of the steel sheet 21 is longer compared with the case where steel sheets 21 and 22 have the same emissivity. As a result, after the heating of the blank 20 ends, unevenness of the phase transformation due to the difference in cooling rate between the steel sheets 21, 22 and 23 can be reduced. Specifically, the start of the phase transformation from austenite to ferrite of the steel sheet 21 having the smallest sheet thickness $t_{min}$ can be delayed, so that the difference in start time of phase transformation between the steel sheet 21 and the other steel sheets 22 and 23 can be reduced. As a result, the hardenability of the steel sheets 21, 22 and 23 included in the blank 20 can be made uniform.

For example, when the plating layer 217 of the steel sheet 21 is an aluminum-based plating layer, the heating rate of the steel sheet 21 in the heating step tends to be low. The aluminum-based plating layer is white in color and therefore tends to reflect thermal energy, which inhibits heating of the steel sheet 21. However, with the blank 20 according to this embodiment, the surface of the steel sheet 21 is subjected to a treatment for increasing the emissivity. Therefore, even if the steel sheet 21 is a plated steel sheet having an aluminum-based plating layer, heating of the steel sheet 21 in the heating step is promoted, and a long high temperature retention time of the steel sheet 21 can be ensured. Therefore, the hardenability of the steel sheet 21 having a smaller thickness can be ensured.

In this embodiment, in the heating step, the steel sheet 21 having the smallest sheet thickness $t_{min}$ first reaches a temperature in the austenite zone, and the steel sheet 22 having the middle sheet thickness $t_{mid}$ and the steel sheet 23 having the largest sheet thickness $t_{max}$ then reach the temperature in the austenite zone. Here, the ratio of the largest sheet thickness $t_{max}$ to the smallest sheet thickness $t_{min}$: $t_{max}/t_{min}$ is preferably 3.2 or less. In this way, the steel sheet 23 having the sheet thickness $t_{max}$ can be sufficiently heated so that the phase transformation to austenite is completed, before alloying of the plating layer 217 of the steel sheet 21 having the sheet thickness $t_{min}$ excessively proceeds as a result of the heating, the diffusion layer grows, and the corrosion resistance or the weldability are lost. Therefore, a process window can be ensured in the production of the structural member 10.

In this embodiment, in order to increase the emissivity of the steel sheet 21, the steel sheet 21 can be provided with the film 26. The emissivity of the film 26 (at a temperature of 25°C and a wavelength of 8.0 $\mu$m) is 60% or more, for example. In this way, the steel sheet 21 can be efficiently radiantly heated, and the heating rate of the steel sheet 21 in the heating step is likely to be raised.

In this embodiment, the film 26 can contain carbon black, one or more oxides selected from among the group consisting of Zr oxide, Zn oxide and Ti oxide, and 0 to 0.30 g/m² or less silica. The content $X_{CB}$ (g/m²) of carbon black and the content $X_{Oxide}$ (g/m²) of the oxide preferably satisfy Formula (1) described above. As described in Patent Literature 1, Formula (1) is a formula that defines a relationship between the increasing rate (%) of the heating rate (°C/s), and the content $X_{CB}$ of carbon black and the content $X_{Oxide}$ of the oxide. Formula (1) shows that carbon black primarily serves as a heat absorbing material in the range up to 700°C, and the oxide primarily serves as a heat absorbing material in the range of 700°C or more. When the film 26 satisfies Formula (1), the emissivity of the surface of the steel sheet 21 provided with the film 26 at a temperature of 25°C and a wavelength of 8.0 $\mu$m is likely to be 60% or more.

The carbon black and the oxide can be dispersed over the whole of a surface of the film 26 that is perpendicular to the sheet thickness direction of the steel sheet 21. Therefore, the emissivity of the surface of the steel sheet 21 is more likely to be uniform. Therefore, in the heating step, the steel sheet 21 having the smallest sheet thickness $t_{min}$ can be quickly and uniformly heated.

However, the configuration of the film 26 is not limited to this. The film 26 can be any film that is substantially black in color in order to increase the emissivity of the steel sheet 21 compared with the case where the steel sheet 21 is not subjected to any treatment. For example, the film 26 may contain graphite, soot or the like, instead of or in addition to carbon black. Alternatively, in order to increase the emissivity of the steel sheet 21, the film 26 may contain an acicular compound having a hexagonal crystal structure having an aspect ratio of 4 or more and 50 or less, for example. Although the compound having a hexagonal crystal structure is typically graphite (C), the compound may be lanthanum silicate, magnesium diboride, beryllium oxide (beryllia), zinc oxide, $\beta$-quartz, millerite (NiS), wurtzite (ZnS) or the like.

<Second Embodiment>

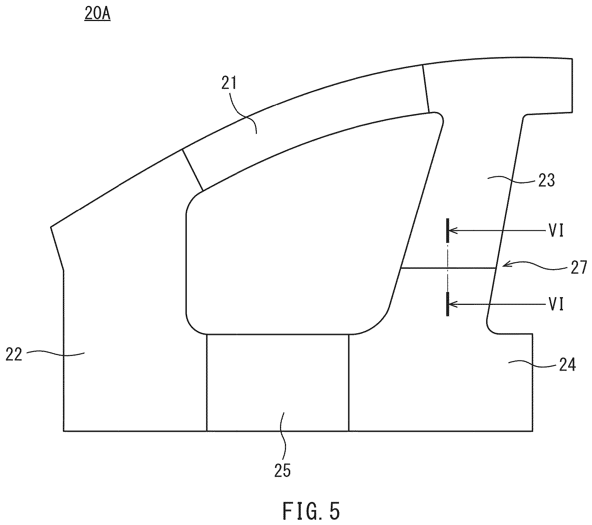

FIG. 5 is a plan view of a blank 20A according to a second embodiment. The blank 20 according to the first embodiment is a so-called tailor welded blank formed by the steel sheets 21, 22 and 23 butt-joined to each other. The blank 20A according to this embodiment mainly differs from the blank 20 according to the first embodiment in how the junctures are made between the steel sheets.

With reference to FIG. 5, the blank 20A includes multiple steel sheets 21, 22, 23, 24 and 25. The steel sheets 21, 22, 23, 24 and 25 are disposed and joined to each other to form an annular shape in plan view of the blank 20. As in the first embodiment, the steel sheet 21 has the smallest sheet thickness $t_{min}$ and is configured so that the emissivity of at least one surface thereof is higher than the emissivity of both surfaces of the steel sheet 22. Therefore, the blank 20A according to this embodiment has the same effects as in the first embodiment.

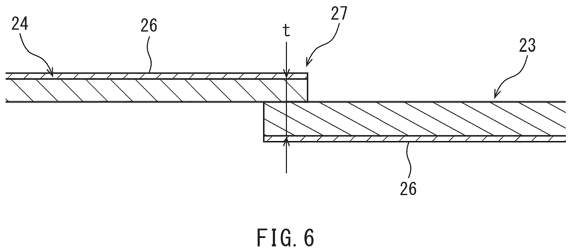

The blank 20A has an overlap part 27. FIG. 6 is a cross-sectional view taken along the line VI-VI in FIG. 5, showing a cross section of the overlap part 27. In this embodiment, the overlap part 27 is formed by laying end parts of adjacent two steel sheets 23 and 24 one on another. The end part of the steel sheet 23 is laid on the end part of the steel sheet 24 and joined thereto. The steel sheets 23 and 24 are joined to each other by spot welding or laser welding, for example.

The overlap part 27 has a total sheet thickness t. The total sheet thickness t is the sum of the sheet thickness of the steel sheet 23 and the sheet thickness of the steel sheet 24. When at least one of the steel sheets 23 and 24 is a plated steel sheet, the total sheet thickness t includes the thickness of the plating layer. The total sheet thickness t of the overlap part 27 is 2.5 mm or more and 4.0 mm or less, for example. In this case, the steel sheet 23 is configured so that the emissivity of the surface located on the outer side of the overlap part 27, that is, the surface opposite to the steel sheet 24, is higher than the emissivity of both surfaces of the steel sheet 22 (FIG. 5). The steel sheet 24 is configured so that the emissivity of the surface located on the outer side of the overlap part 27, that is, the surface opposite to the steel sheet 23, is higher than the emissivity of both surfaces of the steel sheet 22. That is, the whole of the surface of each of the steel sheets 23 and 24 that is located on the outer side of the overlap part 27 is subjected to a treatment for increasing the emissivity. For example, at a temperature of 25°C and a wavelength of 8.0 $\mu$m, the emissivity of the surface of each of the steel sheets 23 and 24 that is located on the outer side of the overlap part 27 is 60% or more, preferably 70% or more, and more preferably 80% or more. The difference in emissivity at a temperature of 25°C and a wavelength of 8.0 $\mu$m between the surface of each of the steel sheets 23 and 24 that is located on the outer side of the overlap part 27 and both surfaces of the steel sheet 22 is preferably more than 5%, more preferably more than 10%, and even more preferably more than 20%. The emissivity of the surface of each of the steel sheets 23 and 24 that is located on the inner side of the overlap part 27 may be higher than the emissivity of both surfaces of the steel sheet 22 or may be equal to or less than the emissivity of both surfaces of the steel sheet 22.

In the steel sheets 23 and 24, the surface located on the outer side of the overlap part 27 may be coated with a film 26, and thus the emissivity of the surface may be higher than the emissivity of the steel sheet 22 (FIG. 5). The film 26 used for the steel sheets 23 and 24 may have the same configuration as the film 26 used for the steel sheet 21. Since the film thickness of the film 26 is very small as described above, the measured sheet thickness including the film 26 can be regarded as the total sheet thickness t of the overlap part 27.

When the total sheet thickness t of the overlap part 27 is more than 2.5 mm, for example, the temperature of the overlap part 27 is slow to rise. Therefore, when the blank 20A is heated for hot stamping, alloying of the plating layer 217 (FIGS. 3B and 3C) of the steel sheet 21 having the smallest sheet thickness $t_{min}$ may proceed and the diffusion layer may grow before the overlap part 27 reaches a temperature in the austenite zone, and the corrosion resistance or the weldability of the steel sheet 21 may be unable to be ensured. However, in this embodiment, the emissivity of the overlap part 27 is increased to promote heating, so that even when the total sheet thickness t of the overlap part 27 is more than 2.5 mm, the overlap part 27 can be sufficiently heated so that the phase transformation to austenite is completed, before alloying of the plating layer 217 of the steel sheet 21 proceeds and the diffusion layer grows until the corrosion resistance or the weldability are lost. Therefore, a process window can be ensured in the production of the structural member.

With the blank 20A according to this embodiment, the steel sheet 21 may be butt-joined to the steel sheets 22 and 23 or may form the overlap part 27 with one or both of the steel sheets 22 and 23. The steel sheet 25 may be butt-joined to the steel sheets 22 and 24 or may form the overlap part 27 with one or both of the steel sheets 22 and 24. When the steel sheets 21 and 23 form the overlap part 27, and the total sheet thickness t of the overlap part 27 is more than 2.5 mm, the steel sheets 21 and 23 may be configured so that the emissivity of the surface located on the outer side of the overlap part 27 is higher than the emissivity of both surfaces of the steel sheet 22. Similarly, when the steel sheets 24 and 25 form the overlap part 27, and the total sheet thickness t of the overlap part 27 is more than 2.5 mm, the steel sheets 24 and 25 may be configured so that the emissivity of the surface located on the outer side of the overlap part 27 is higher than the emissivity of both surfaces of the steel sheet 22.

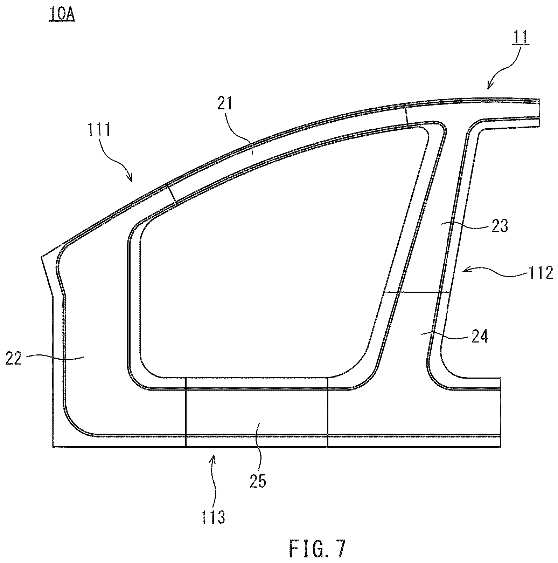

FIG. 7 is a plan view of a structural member 10A produced from the blank 20A. The structural member 10A generally has the same configuration as the structural member 10 according to the first embodiment (FIGS. 1 and 2). However, in the structural member 10A, a member main body 11 is formed of five steel sheets 21, 22, 23, 24 and 25. The method of producing the structural member 10A from the blank 20A is the same as the method in the first embodiment.

The structural member 10A can have the same size as the structural member 10 according to the first embodiment. Specifically, the size of the structural member 10A having an annular shape in plan view is 1.0 m or more and 4.0 mm or less, for example. In the structural member 10A, the steel sheets 21, 22, 23, 24 and 25 each have an open cross section, as with the steel sheets in the first embodiment. The steel sheets 21, 22, 23, 24 and 25 may each have a generally hat-like shape in cross-sectional view of the structural member 10A, for example.

Although not shown, in the structural member 10A, the width of the steel sheet 21 located at an upper part of a front pillar 111 is 15 mm or more and 300 mm or less, for example. The height of the steel sheet 21 may be 10 mm or more and 150 mm or less. In the structural member 10A, the width of the steel sheet 22 located at a lower part of the front pillar 111 is 30 mm or more and 750 mm or less, for example. The height of the steel sheet 22 may be 25 mm or more and 150 mm or less. In the structural member 10A, the width of the steel sheets 23 and 24 located at the center pillar 112 is 15 mm or more and 300 mm or less, for example. The height of the steel sheets 23 and 24 may be 10 mm or more and 150 mm or less. In the structural member 10A, the width of the steel sheet 25 located at the position of the rocker 113 is 30 mm or more and 300 mm or less, for example. The height of the steel sheet 25 may be 25 mm or more and 150 mm or less.

Although embodiments of the present disclosure have been described above, the present disclosure is not limited to the embodiments described above, and various modifications can be made without departing from the spirit of the present disclosure.

In each of the embodiments described above, in order to increase the emissivity of the surface of the steel sheet 21 having the smallest sheet thickness $t_{min}$ to be higher than the emissivity of the steel sheet 22, the surface of the steel sheet 21 is coated with the film 26. However, the means for increasing the emissivity of the surface of the steel sheet 21 is not limited to the film 26. For example, the emissivity of the surface of the steel sheet 21 may be increased to be higher than the emissivity of the steel sheet 22 by increasing the surface roughness of the steel sheet 21 to be higher than the surface roughness of the steel sheet 22. Similarly, the means for increasing the emissivity of the surface on the outer side of the overlap part 27 is not limited to the film 26.

In each of the embodiments described above, an example has been described in which the emissivity of only one of both surfaces of the steel sheet 21 having the smallest sheet thickness $t_{min}$ is increased to be higher than the emissivity of the steel sheet 22. However, the emissivity of both surfaces of the steel sheet 21 may be increased to be higher than the emissivity of the steel sheet 22. For example, both surfaces of the steel sheet 21 may be coated with the film 26. Alternatively, the surface roughness of both surfaces of the steel sheet 21 may be increased to be higher than the surface roughness of the steel sheet 22.

In the first embodiment described above, each of the steel sheets 21, 22 and 23 included in the blank 20 may be single-layer or multilayer. That is, each of the steel sheets 21, 22 and 23 may be a single steel sheet or a sheet material formed by multiple steel sheets overlaid on one another. Similarly, in the second embodiment described above, each of the steel sheets 21, 22, 23, 24 and 25 may be single-layer or multilayer.

In the first embodiment described above, the blank 20 includes three steel sheets 21, 22 and 23. In the second embodiment described above, the blank 20A includes five steel sheets 21, 22, 23, 24 and 25. However, the number of steel sheets included in the blanks 20 and 20A is not limited to these. The blanks 20 and 20A have only to include the steel sheet 21 having the smallest sheet thickness $t_{min}$ and the steel sheet 22 having a sheet thickness larger than the sheet thickness $t_{min}$. The emissivity of one surface or both surfaces of the steel sheet 21 is higher than the emissivity of both surfaces of the steel sheet 22. The steel sheet 21 is directly or indirectly joined to the steel sheet 22. The blanks 20 and 20A having an annular shape in plan view can typically include three or more steel sheets. In the blanks 20 and 20A, the steel sheets other than the steel sheets 21 and 22 may or may not be subjected to a treatment for increasing the emissivity. When any of the blanks 20 and 20A includes multiple steel sheets 21 having the smallest sheet thickness $t_{min}$, the emissivity of one surface or both surfaces of all the steel sheets 21 is preferably higher than the emissivity of both surfaces of the steel sheet 22. In the blanks 20 and 20A having an annular shape, the arrangement of the multiple steel sheets including the steel sheets 21 and 22 is not particularly limited.

In each of the embodiments described above, an example has been described in which the steel sheet 21 having the smallest sheet thickness $t_{min}$ is a plated steel sheet. However, the steel sheet 21 does not necessarily need to be a plated steel sheet. The steel sheet 21 may be a steel sheet with no plating layer on the surface thereof (a bare material). Similarly, the steel sheets other than the steel sheet 21 may be a plated steel sheet or a bare material.

In the first embodiment described above, the press tooling 40 used for hot stamping of the blank 20 includes the punch 41 and the die 42. However, the configuration of the press tooling 40 is not limited to the example described in the first embodiment. The press tooling 40 may further include a pad or a blank holder, for example.

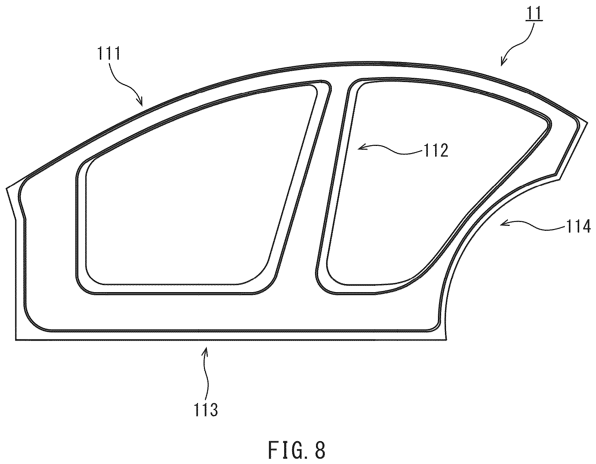

In the embodiments described above, the main body 11 of the structural members 10 and 10A includes the front pillar 111, the center pillar 112 and the rocker 113. However, the member main body 11 may further include another component. For example, as shown in FIG. 8, the member main body 11 may further include a rear pillar 114. The structural members 10 and 10A according to the embodiments described above are door ring parts (single door ring parts) having a single ring shape. On the other hand, the structural member shown in FIG. 8 is a door ring part (double door ring part) having a double ring shape. When producing the double door ring part, the blank used as the starting material also has the double ring shape.

EXAMPLES

In the following, the present disclosure will be described in more detail with reference to examples. However, the present disclosure is not limited to the examples described below.

[First Example]

In order to check the effects of the present disclosure, using commercially available software (AUTOFORM R. 10 available from AUTOFORM), CAE analysis of the press forming (hot stamping) of structural members that were single door ring parts was performed for different types (types of starting materials) and sheet thicknesses of steel sheets included in the structural members and different division patterns of the structural members.

Table 1 shows the steel sheets used in this analysis.

[Table 1]

TABLE 1

| Symbol | Type of starting material | Base material | Film specifications |
|--------|---------------------------|---------------|---------------------|
| A | Al-Si 1.5G HS | Steel sheet for 1.5 GPa class hot stamping | No film |
| A-1 | Al-Si 1.5G HS | Steel sheet for 1.5 GPa class hot stamping | Black film/one side |
| A-2 | Al-Si 1.5G HS | Steel sheet for 1.5 GPa class hot stamping | Black film/both sides |
| A-G | GA 1.5G HS | Steel sheet for 1.5 GPa class hot stamping | No film |
| A-N | No plating 1.5G HS | Steel sheet for 1.5 GPa class hot stamping | No film |
| B | Al-Si 2.0G HS | Steel sheet for 2.0 GPa class hot stamping | No film |
| B-1 | Al-Si 2.0G HS | Steel sheet for 2.0 GPa class hot stamping | Black film/one side |

(continued)

| Symbol | Type of starting material | Base material | Film specifications |
|--------|--------------------------|---------------|---------------------|
| B-2 | Al-Si 2.0G HS | Steel sheet for 2.0 GPa class hot stamping | Black film/both sides |
| B-G | GA 1.5G HS | Steel sheet for 2.0 GPa class hot stamping | No film |
| B-N | No plating 1.5G HS | Steel sheet for 2.0 GPa class hot stamping | No film |
| C | Al-Si 2.5G HS | Steel sheet for 2.5 GPa class hot stamping | No film |
| C-1 | Al-Si 2.5G HS | Steel sheet for 2.5 GPa class hot stamping | Black film/one side |
| C-2 | Al-Si 2.5G HS | Steel sheet for 2.5 GPa class hot stamping | Black film/both sides |
| D | Al-Si 1.0G HS | Steel sheet for 1.0 GPa class hot stamping | No film |
| D-1 | Al-Si 1.0G HS | Steel sheet for 1.0 GPa class hot stamping | Black film/one side |
| D-2 | Al-Si 1.0G HS | Steel sheet for 1.0 GPa class hot stamping | Black film/both sides |
| E | Al-Si 0.5G HS | Steel sheet for 0.5 GPa class hot stamping | No film |
| E-1 | Al-Si 0.5G HS | Steel sheet for 0.5 GPa class hot stamping | Black film/one side |
| E-2 | Al-Si 0.5G HS | Steel sheet for 0.5 GPa class hot stamping | Black film/both sides |

In Table 1, the "type of starting material" shows type of plating, tensile strength and use (hot stamping) in this order. Concerning the film specifications, "black film" is a film that contains carbon black and metal oxide and is black in color. "Black film/one side" means that the whole of one surface of the steel sheet is coated with a black film. "Black film/both sides" means that the whole of both surfaces of the steel sheet is coated with a black film.

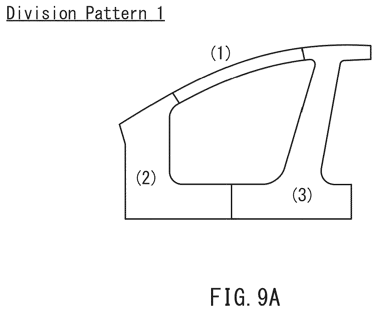

FIGS. 9A to 9G show division patterns of the structural member. FIGS. 9A to 9G show the number of steel sheets (starting materials) included in the structural members that are single door ring parts and the positions of the junctures between the steel sheets in the structural members. In FIGS. 9A to 9G, each steel sheet is denoted by a numeral in parentheses.

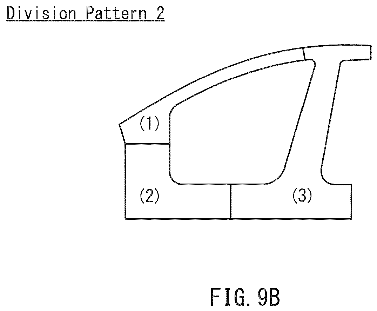

Table 2 shows analysis conditions and results for division patterns 1 and 2 shown in FIGS. 9A and 9B. In FIGS. 9A and 9B, the structural member is formed of three starting materials (1) to (3).

[Table 2]

TABLE 2

| Symbol | Division pattern | Starting material (1) | | Starting material (2) | | Starting material (3) | | Start time of phase transformation, s | Time required to reach 910°C, s |
| | | Type of starting material | Sheet thickness, mm | Type of starting material | Sheet thickness, mm | Type of starting material | Sheet thickness, mm | | |
|---|---|---|---|---|---|---|---|---|---|
| Example 1 | 1 | B | 1.4 | D | 1.4 | B-2 | 1.2 | 21.0 | 115.0 |
| Example 2 | 1 | B-1 | 1.2 | D-1 | 1.3 | A | 1.6 | 20.3 | 128.5 |
| Example 3 | 2 | A | 1.6 | D-2 | 1.2 | A | 1.8 | 21.2 | 115.0 |
| Comparative example 1 | 1 | B | 1.2 | D | 1.4 | B | 1.6 | 17.8 | 149.5 |
| Comparative example 2 | 2 | A | 1.6 | D | 1.2 | A | 1.8 | 18.6 | 149.5 |

With reference to Table 2, in Example 1, both surfaces of a starting material (3) having the smallest sheet thickness $t_{min}$: 1.2 mm among starting materials (1) to (3) were provided with a black film. In Example 2, one surface of a starting material (1) having the smallest sheet thickness $t_{min}$: 1.2 mm among starting materials (1) to (3) was provided with a black film. In Example 3, both surfaces of a starting material (2) having the smallest sheet thickness $t_{min}$: 1.2 mm among starting materials (1) to (3) were provided with a black film. On the other hand, in Comparative examples 1 and 2, any of starting materials (1) to (3) was not provided with a black film. In Comparative examples 1 and 2, the starting material having the smallest sheet thickness $t_{min}$: 1.2 mm was not provided with a black film.

In Table 2, "time required to reach 910°C" means the time required to reach 910°C by the first starting material to be heated to 910°C ($A_{c3}$ point or higher) after the start of heating of the blank among the starting materials included in the blank. "Start time of phase transformation" means the shortest time until the phase transformation to ferrite starts after the blank is heated at a furnace temperature of 920°C for five minutes and thirty seconds and then removed from the heating furnace. As can be seen from Table 2, in Examples 1 to 3 in which the emissivity of the thinnest starting material was increased by the black film, the time required to reach 910°C was 20 seconds or more shorter than in Comparative examples 1 and 2, and the heating rate of the thinnest starting material in the heating step was increased. Furthermore, in Examples 1 to 3, the start time of phase transformation was more than 20 seconds and was delayed compared with Comparative examples 1 and 2. Therefore, the blank is more likely to start being shaped before the start of ferrite transformation, and the blank can be uniformly quenched in the shaping step.

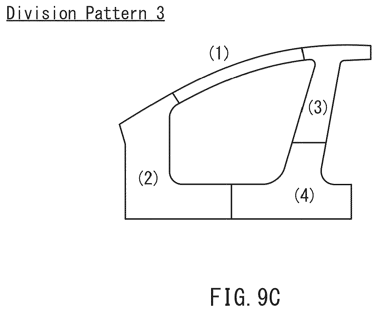

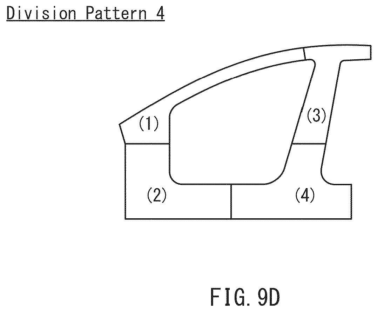

Table 3 shows analysis conditions and results for division patterns 3 and 4 shown in FIGS. 9C and 9D. In FIGS. 9C and 9D, the structural member is formed of four starting materials (1) to (4).

[Table 3]

TABLE 3

| Symbol | Division pattern | Starting material (1) | | Starting material (2) | | Starting material (3) | | Starting material (4) | | Start time of phase transformation, s | Time required to reach 910°C, s |
|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | | |
| Example 4 | 3 | C-2 | 1.2 | A-1 | 1.3 | A | 1.8 | A | 1.4 | 21.2 | 115.0 |
| Example 5 | 4 | B | 1.6 | B-2 | 1.2 | B | 1.8 | C | 1.4 | 21.0 | 115.0 |
| Example 6 | 4 | B-G | 1.6 | A | 1.4 | A-N | 1.8 | A-1 | 1.2 | 20.3 | 128.5 |
| Example 7 | 3 | B-1 | 1.2 | D | 1.4 | B-N | 1.8 | D-2 | 1.2 | 20.3 | 115.0 |
| Example 8 | 4 | A | 1.6 | C-1 | 1.2 | B | 2.6 | A-1 | 1.2 | 20.1 | 128.5 |
| Example 9 | 4 | A-G | 1.6 | B | 1.4 | B-1 | 1.2 | D | 1.4 | 20.3 | 128.5 |
| Example 10 | 4 | A | 1.6 | A-2 | 1.2 | B-2 | 1.2 | A | 1.4 | 21.0 | 115.0 |
| Comparative example 3 | 3 | C | 1.2 | A | 1.3 | A | 1.8 | A | 1.4 | 19.0 | 149.5 |
| Comparative example 4 | 4 | B | 1.6 | B | 1.2 | B | 1.8 | C | 1.4 | 17.8 | 149.5 |
| Comparative example 5 | 4 | B-G | 1.6 | A | 1.4 | A-N | 1.8 | A | 1.2 | 18.0 | 149.5 |
| Comparative example 6 | 3 | B | 1.2 | D | 1.4 | B | 1.8 | D | 1.2 | 17.8 | 149.5 |
| Comparative example 7 | 4 | A | 1.6 | C | 1.2 | B | 2.6 | A | 1.2 | 17.7 | 149.5 |

EP 4 703 058 A1

With reference to Table 3, in Examples 4 to 10, a starting material having the smallest sheet thickness $t_{min}$ among starting materials (1) to (4) was provided with a black film. In Examples 4 to 10, one surface or both surfaces of the starting material having the smallest sheet thickness $t_{min}$ was coated with the black film. When there were multiple starting materials having the smallest sheet thickness $t_{min}$, all those starting materials were provided with the black film. On the other hand, in Comparative examples 3 to 7, any of starting materials (1) to (4) was not provided with the black film. In Comparative examples 3 to 7, the starting material having the smallest sheet thickness $t_{min}$ was not provided with the black film.

Table 3 shows that in Examples 4 to 10, the time required to reach 910°C was 20 seconds or more shorter than in Comparative examples 3 to 7, and the heating rate of the thinnest starting material in the heating step was increased. Furthermore, in Examples 4 to 10, the start time of phase transformation was more than 20 seconds and was delayed compared with Comparative examples 3 to 7. Therefore, the blank is more likely to start being shaped before the start of ferrite transformation, and the blank can be uniformly quenched in the shaping step.

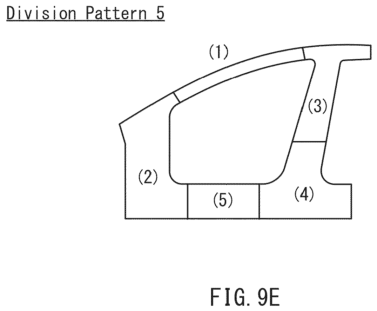

Table 4 shows analysis conditions and results for division patterns 5 to 7 shown in FIGS. 9E to 9G. In FIGS. 9E to 9G, the structural member is formed of five starting materials (1) to (5).

[Table 4]

EP 4 703 058 A1

TABLE 4

| Symbol | Division pattern | Starting material (1) | | Starting material (2) | | Starting material (3) | | Starting material (4) | | Starting material (5) | | Start time of phase transformation, s | Time required to reach 910°C, s |
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | |
|---|---|---|---|---|---|---|---|---|---|---|---|---|---|
| Example 11 | 5 | A-1 | 1.2 | A | 1.6 | C | 1.4 | A-1 | 1.2 | A | 1.4 | 20.3 | 128.5 |
| Example 12 | 5 | A-2 | 1.2 | B | 1.6 | C-1 | 1.2 | D | 1.8 | B-2 | 1.2 | 21.0 | 115.0 |
| Example 13 | 7 | A-1 | 1.2 | C-1 | 1.2 | A | 1.8 | B-1 | 1.0 | D | 1.4 | 18.1 | 107.0 |
| Example 14 | 7 | C-2 | 1.2 | B | 1.6 | B | 1.4 | A-1 | 1.2 | A | 1.4 | 21.2 | 115.0 |
| Example 15 | 6 | B | 1.6 | B | 1.4 | A | 1.6 | D-1 | 1.2 | B | 1.4 | 20.1 | 128.5 |
| Comparative example 8 | 5 | A | 1.2 | A | 1.6 | C | 1.4 | A | 1.2 | A | 1.4 | 17.7 | 149.5 |
| Comparative example 9 | 5 | A | 1.2 | B | 1.6 | C | 1.2 | D | 1.8 | B | 1.2 | 17.8 | 149.5 |
| Comparative example 10 | 7 | C | 1.2 | B | 1.6 | B | 1.4 | A | 1.2 | A | 1.4 | 17.7 | 149.5 |
| Comparative example 11 | 6 | B | 1.6 | B | 1.4 | A | 1.6 | D | 1.2 | B | 1.4 | 18.0 | 149.5 |

With reference to Table 4, in Examples 11 to 15, a starting material having the smallest sheet thickness $t_{min}$ among starting materials (1) to (5) is provided with a black film. In Examples 11 to 15, one surface or both surfaces of the starting material having the smallest sheet thickness $t_{min}$ was coated with the black film. When there were multiple starting materials having the smallest sheet thickness $t_{min}$, all those starting materials were provided with the black film. On the other hand, in Comparative examples 8 to 11, any of starting materials (1) to (5) was not provided with the black film. In Comparative examples 8 to 11, the starting material having the smallest sheet thickness $t_{min}$ was not provided with the black film.

As can be seen from Table 4, in Examples 11 to 15, the time required to reach 910°C was 20 seconds or more shorter than in Comparative examples 8 to 11, and the heating rate of the thinnest starting material in the heating step was increased. Furthermore, in Examples 11 to 15, the start time of phase transformation was more than 20 seconds and was delayed compared with Comparative examples 8 to 11. Therefore, the blank is more likely to start being shaped before the start of ferrite transformation, and the blank can be uniformly quenched in the shaping step.

In the examples and the comparative examples shown in Tables 2 to 4, the starting materials were butted on each other and then joined by laser welding (butt-joint). On the other hand, in the examples and comparative examples shown in Table 5 described below, some starting materials were joined by spot welding, for example, to form an overlap part.

[Table 5]

TABLE 5

| Symbol | Division pattern | Starting material (1) | | Starting material (2) | | Starting material (3) | | Starting material (4) | | Starting material (5) | | Start time of phase transformation, s | Time required to reach 910°C, s |
|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | |
| Example 16 | 6 | A | 1.6 | A-1 | 1.6 | C-1 | 1.4 | A-1 | 1.2 | A-1 | 1.4 | 20.3 | 128.5 |
| Example 17 | 5 | B | 1.4 | A-1 | 1.4 | B-1 | 1.4 | D-1 | 1.2 | A-1 | 1.2 | 20.3 | 128.5 |
| Comparative example 12 | 6 | A | 1.2 | A | 1.6 | C | 1.4 | A | 1.2 | A | 1.4 | 17.7 | 149.5 |
| Comparative example 13 | 5 | B | 1.6 | A | 1.4 | B | 1.6 | D | 1.2 | A | 1.4 | 17.8 | 149.5 |

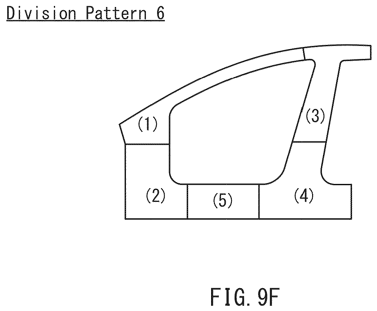

With reference to Table 5 and FIG. 9F, in Example 16 and Comparative example 12, starting materials (2) and (5), starting materials (3) and (4), and starting materials (4) and (5) each form an overlap part at the juncture therebetween. With reference to Table 5 and FIG. 9E, in Example 17 and Comparative example 13, starting materials (2) and (5) and starting materials (3) and (4) each form an overlap part at the juncture therebetween.

As shown in Table 5, in Examples 16 and 17, the starting material having the smallest sheet thickness $t_{min}$ among the starting materials (1) to (5) was provided with the black film. On the other hand, in Comparative examples 12 and 13, any of the starting materials (1) to (5) was not provided with the black film. In Comparative examples 12 and 13, the starting material having the smallest sheet thickness $t_{min}$ was not provided with the black film.

As can be seen from Table 5, in Examples 16 and 17, the time required to reach 910°C was 20 seconds or more shorter than in Comparative examples 12 and 13, and the start time of phase transformation was delayed. Therefore, it was ascertained that even when the blank includes an overlap part, the same effects as in the case of butt-joint are achieved by increasing the emissivity of the thinnest starting material.

[Second Example]

The same analysis as in the first example was performed of the press forming (hot stamping) of structural members that were double door ring parts for different types and sheet thicknesses of starting materials included in the structural members and different division patterns of the structural members.

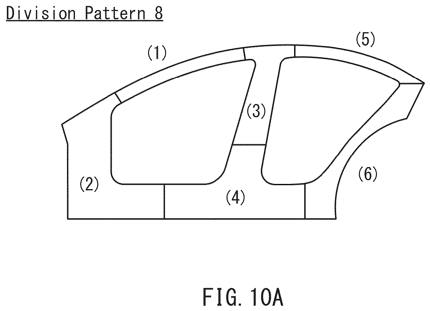

The steel sheets as the starting materials were selected from those shown in Table 1, as in the first embodiment. The division patterns of the structural members are shown in FIGS. 10A to 10D. FIGS. 10A to 10D show the number of steel sheets (starting materials) included in the structural members that are double door ring parts and the positions of the junctures between the steel sheets in the structural members. In FIGS. 10A to 10D, each steel sheet as the starting material is denoted by a numeral in parentheses.

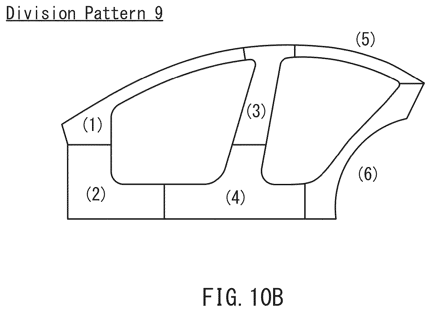

Table 6 shows analysis conditions and results for division patterns 8 and 9 shown in FIGS. 10A and 10B. In FIGS. 10A and 10B, the structural member is formed of six starting materials (1) to (6).

[Table 6]

TABLE 6

| Symbol | Division pattern | Starting material (1) | | Starting material (2) | | Starting material (3) | | Starting material (4) | | Starting material (5) | | Starting material (6) | | Start time of phase transformation, s | Time required to reach 910°C, s |
|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | |
| Example 18 | 8 | C | 1.6 | A | 1.4 | A | 1.8 | D | 1.4 | B-1 | 1.0 | D-1 | 1.2 | 18.4 | 107.0 |
| Example 19 | 8 | A | 1.6 | B-1 | 1.3 | B | 1.8 | A | 1.4 | A-1 | 1.2 | A-1 | 1.0 | 17.9 | 107.0 |
| Example 20 | 9 | B | 1.6 | A | 1.4 | C | 1.8 | B | 1.4 | B-2 | 1.0 | A-2 | 1.0 | 18.1 | 95.5 |
| Comparative example 14 | 8 | C | 1.6 | A | 1.4 | A | 1.8 | D | 1.4 | B | 1.0 | D | 1.2 | 16.5 | 124.5 |
| Comparative example 15 | 9 | B | 1.6 | A | 1.4 | C | 1.8 | B | 1.4 | B | 1.0 | A | 1.0 | 15.8 | 124.5 |

With reference to Table 6, in Examples 18 to 20, a starting material having the smallest sheet thickness $t_{min}$ among starting materials (1) to (6) was provided with a black film. In Examples 18 to 20, one surface or both surfaces of the starting material having the smallest sheet thickness $t_{min}$ was coated with the black film. On the other hand, in Comparative examples 14 and 15, any of starting materials (1) to (6) was not provided with the black film. In Comparative examples 14 and 15, the starting material having the smallest sheet thickness $t_{min}$ was not provided with the black film.

As can be seen from Table 6, in Examples 18 to 20, the time required to reach 910°C was about 20 seconds shorter than in Comparative examples 14 and 15, and the heating rate of the thinnest starting material in the heating step was increased. Furthermore, in Examples 18 to 20, the start time of phase transformation was delayed compared with Comparative examples 14 and 15. Therefore, it can be said that by increasing the emissivity of the thinnest starting material, the blank is more likely to start being shaped before the start of ferrite transformation, and the blank can be uniformly quenched in the shaping step.

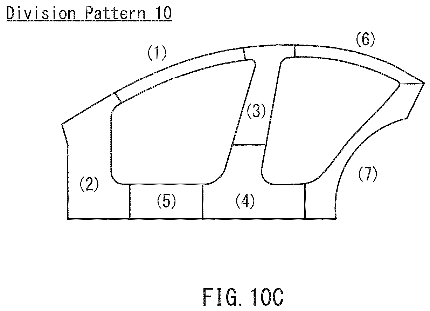

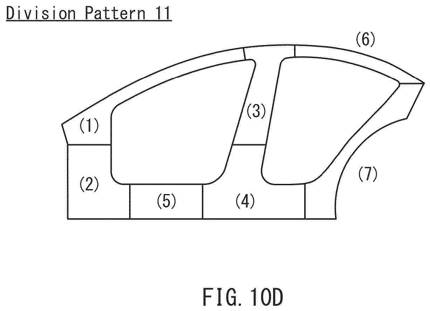

Table 7 shows analysis conditions and results for division patterns 10 and 11 shown in FIGS. 10C and 10D. In FIGS. 10C and 10D, the structural member is formed of seven starting materials (1) to (7).

[Table 7]

TABLE 7

| Symbol | Division pattern | Starting material (1) | | Starting material (2) | | Starting material (3) | | Starting material (4) | | Starting material (5) | | Starting material (6) | | Starting material (7) | | Start time of phase transformation, s | Time required to reach 910°C, s |
|---|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | |
| Example 21 | 10 | C | 1.6 | A | 1.4 | A | 1.8 | D-2 | 1.2 | D-1 | 1.4 | B-1 | 1.2 | D-2 | 1.0 | 18.1 | 95.5 |
| Example 22 | 10 | A | 1.6 | A | 1.4 | B | 1.8 | A-1 | 1.2 | B-1 | 1.2 | A-1 | 1.2 | A-1 | 1.2 | 17.9 | 107.0 |
| Example 23 | 11 | B | 1.6 | B-1 | 1.3 | C | 1.8 | E-1 | 1.2 | A-2 | 1.2 | B-2 | 1.2 | A-2 | 1.0 | 18.1 | 95.5 |
| Comparative example 16 | 10 | C | 1.6 | A | 1.4 | A | 1.8 | D | 1.2 | D | 1.4 | B | 1.2 | D | 1.2 | 17.4 | 149.5 |
| Comparative example 17 | 11 | B | 1.6 | A | 1.4 | C | 1.8 | E | 1.2 | A | 1.2 | B | 1.2 | A | 1.0 | 15.8 | 124.5 |

With reference to Table 7, in Examples 21 to 23, a starting material having the smallest sheet thickness $t_{min}$ among starting materials (1) to (7) was provided with a black film. In Examples 21 to 23, one surface or both surfaces of the starting material having the smallest sheet thickness $t_{min}$ was coated with the black film. On the other hand, in Comparative examples 16 and 17, any of starting materials (1) to (7) was not provided with the black film. In Comparative examples 16 and 17, the starting material having the smallest sheet thickness $t_{min}$ was not provided with the black film.

As can be seen from Table 7, in Examples 21 to 23, the time required to reach 910°C was shorter than in Comparative examples 16 and 17, and the heating rate of the thinnest starting material in the heating step was increased. Furthermore, in Examples 21 to 23, the start time of phase transformation was delayed compared with Comparative examples 16 and 17. Therefore, the blank is more likely to start being shaped before the start of ferrite transformation, and the blank can be uniformly quenched in the shaping step.

[Third Example]

In order to check the effect of the sheet thickness on the press forming (hot stamping) of structural members that are single door ring parts, the same analysis as in the first example was performed for different combinations of starting materials and different ways of joining. Table 8 shows analysis conditions and results.

[Table 8]

TABLE 8

| Symbol | Division pattern | Starting material (1) | | Starting material (2) | | Starting material (3) | | Starting material (4) | | Starting material (5) | | Smallest sheet thickness $t_{min}$ | Largest sheet thickness $t_{max}$ | Sheet thickness ratio $t_{max}/t_{min}$ | Largest total sheet thickness t | Time required to reach 910°C, s | PW | Heating time |
|---|---|---|---|---|---|---|---|---|---|---|---|---|---|---|---|---|---|
| | | Type of starting material | Sheet thickness, mm | Type of starting material | Sheet thickness, mm | Type of starting material | Sheet thickness, mm | Type of starting material | Sheet thickness, mm | Type of starting material | Sheet thickness, mm | | | | | | | |
| Test example 1 | 7-Overlap | A-1 | 1.6 | A-1 | 1.4 | C-1 | 1.4 | A-1 | 1.2 | A | 1.4 | 1.2 | 1.6 | 1.3 | 3.0 | 128.5 | 85.5 | 288.0 |
| Test example 2 | 7-Butt | A-1 | 1.6 | A | 1.4 | C | 1.4 | A-1 | 1.2 | A | 1.4 | 1.2 | 1.6 | 1.3 | 1.6 | 128.5 | 174.0 | 199.5 |
| Test example 3 | 7-Butt | A | 1.6 | A | 1.4 | A-1 | 3.2 | A-1 | 1.0 | A | 1.4 | 1.0 | 3.2 | 3.2 | 3.2 | 107.0 | 9.0 | 343.0 |
| Test example 4 | 5-Overlap | C-1 | 1.2 | B | 1.6 | B-1 | 2.0 | A-1 | 1.8 | A | 1.6 | 1.2 | 2.0 | 1.7 | 3.8 | 128.5 | 8.3 | 365.3 |
| Test example 5 | 7-Overlap | A-1 | 1.0 | A | 1.4 | A-1 | 3.3 | A-1 | 1.0 | A | 1.4 | 1.0 | 3.3 | 3.3 | 4.3 | 107.0 | -61.4 | 413.4 |
| Test example 6 | 7-Butt | A | 1.6 | A | 1.4 | A-1 | 3.3 | A-1 | 1.0 | A | 1.4 | 1.0 | 3.3 | 3.3 | 3.3 | 107.0 | -1.8 | 353.8 |
| Reference example 1 | 5-Overlap | C | 1.4 | A | 1.4 | A | 1.4 | D | 1.4 | B | 1.4 | 1.4 | 1.4 | 1.0 | 2.8 | 174.5 | 70.0 | 305.0 |

**EP 4 703 058 A1**

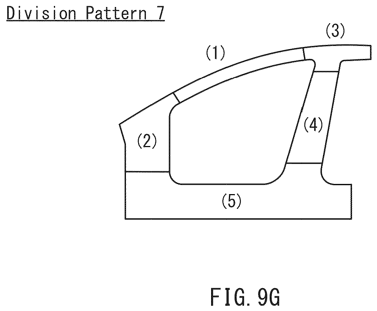

The division pattern in Test examples 1 and 5 was the division pattern 7 shown in FIG. 9G. The division pattern in Test example 4 was the division pattern 5 shown in FIG. 9E. In Test examples 1, 4 and 5, some starting materials form an overlap part at the juncture therebetween. More specifically, in Test examples 1 and 5, starting materials (1) and (2), starting materials (1) and (3), starting materials (2) and (5) and starting materials (4) and (5) each form an overlap part at the juncture therebetween. In Test example 4, starting materials (1) and (2), starting materials (1) and (3), starting materials (3) and (4) and starting materials (2) and (5) each form an overlap part at the juncture therebetween. In any of these test examples, the starting material having the smallest sheet thickness $t_{min}$ was provided with a black film. Furthermore, in any of these test examples, both outer sides of the overlap part having the largest total sheet thickness t were provided with a black film.

The division pattern in Test examples 2, 3 and 6 was the division pattern 7 shown in FIG. 9G. In Test examples 2, 3 and 6, the starting materials were butt-joined to each other. In any of these test examples, the starting material having the smallest sheet thickness $t_{min}$ was provided with the black film.

In Table 8, "process window (PW)" means a value obtained by subtracting the time required for the whole of the blank to reach 910°C after the first to reach 910°C among the starting materials included in the blank reaches 910° from the allowable heating duration of the first starting material after reaching 910°C. If the process window is 5 seconds or less, it means that alloying of the plating layer of the first starting material to reach 910°C in the heating step proceeds, the corrosion resistance of the plating layer cannot be ensured, and it is difficult to produce the structural member of high quality.

As shown in Table 8, in Test examples 5 and 6 in which the ratio of the largest sheet thickness $t_{max}$ to the smallest sheet thickness $t_{min}$: $t_{max}/t_{min}$ was more than 3.2, the process window was negative, and a process window required for production of the structural member of high quality was not able to be ensured. On the other hand, in Test examples 1 to 4 in which $t_{max}/t_{min}$ was 3.2 or less, a process window was able to be ensured.

As shown in Table 8, in Test example 5 in which the largest total sheet thickness t of the overlap part was more than 4.0 mm, the process window was negative, and a process window required for production of the structural member of high quality was not able to be ensured. On the other hand, in Test examples 1 and 4 in which the largest total sheet thickness t of the overlap part was more than 2.5 mm and 4.0 mm or less, a process window of 5 seconds or more was able to be ensured.

In Reference example 1, which is an example of the division pattern 5 as with Test example 4, each starting material, including the overlap part, was not provided with the black film. In Reference example 1, however, the sheet thickness does not vary between the starting materials, and the problem of the proceeding of alloying of the plating layer of the thinnest starting material does not occur, so that a process window of 5 seconds or more was able to be ensured.

In Test examples 1 to 4 and Comparative examples 10 and 13A, the blank was heated at a heating furnace temperature of 920°C for a time required for the whole of the blank to reach 910°, then conveyed to the pressing device in 17 seconds, subjected to hot stamping at a forming rate of 40 mm/s, and kept at the bottom dead center under a pressure of 3000 kN for 20 seconds, thereby producing a hot-stamped structural member. From the thinnest part of these structural members, analysis samples were taken in the method described in the embodiments described above, and variations in martensite fraction were measured. In addition, shape accuracy measurement and shock absorption performance measurement of these structural members were performed. Table 9 shows evaluation results.

[Table 9]

TABLE 9

| Symbol | Division pattern | Variation in martensite fraction | Shape accuracy | Shock absorption performance |
|---|---|---|---|---|
| Test example 1 | 7- Overlap | 10% | ○ | good |
| Test example 2 | 7- Butt | 9% | ○ | better |
| Test example 3 | 7- Butt | 8% | ○ | better |
| Test example 4 | 5- Overlap | 19% | Δ | marginal |
| Comparative example 10 | 7- Butt | 23% | × | poor |
| Comparative example 13A | 5-Overlap | 21% | × | poor |

30

In Table 9, as described in the above embodiments, the variation in martensite fraction is a value obtained by subtracting the minimum martensite fraction (%) from the maximum martensite fraction (%) in the cross section of the structural member at the position of the starting material having the smallest sheet thickness $t_{min}$.

The shape accuracy was evaluated according to the extent to which the structural member having a generally hat-like shape in cross-sectional view placed on another structural member deviates from the other structural member at a part where the structural member is overlaid on the other structural member. In Table 9, O is shown when the distance from the surface of the other structural member is within the range of ±2.0 mm, Δ is shown when the distance is out of the range of ±2.0 mm and within the range of ±3.0 mm, and × is shown when the distance is out of the range of ±3.0 mm.

Concerning the shock absorption performance, assuming the small overlap (SOL) collision and the side collision with the structural member assembled to a vehicle, an impactor simulating a vehicle was made to collide with the structural member, and the maximum amount of intrusion in the SOL collision and the maximum amount of intrusion in the side collision were evaluated. The shock absorption performance was evaluated by comparison with a reference shock absorption performance, which was the shock absorption performance of a door ring part formed by shaping each of the starting materials by hot stamping and then joining the shaped starting materials. In Table 9, a shock absorption performance equivalent to the reference shock absorption performance is shown as good, a shock absorption performance more excellent than the reference shock absorption performance is shown as better, a shock absorption performance slightly lower than the reference shock absorption performance is shown as marginal, and shock absorption performance even lower than the reference shock absorption performance is shown as poor.

In Comparative example 10, which is Comparative example 10 in the first example, the starting materials were butt-joined using laser as in Test example 2. In Comparative example 13A, the same set of sheets as in Comparative example 13 of in the first example was used, some starting materials were lap-joined to each other as in Test example 4. In Comparative examples 10 and 13A, unlike the test examples, each of the starting materials including the thinnest starting material was not provided with the black film. As shown in Table 9, in any of Test examples 1 to 4, the variation in martensite fraction was 20% or less, and the variation in martensite fraction was significantly reduced compared with Comparative examples 10 and 13A. In Test examples 1 to 4, the shape accuracy was also better than in Comparative examples 10 and 13A.

In Test examples 1 to 4 in which the variation in martensite fraction was small, the shock absorption performance was also improved compared with Comparative examples 10 and 13A. In particular, in Test examples 1 to 3 in which the variation in martensite fraction was 15% or less, a shock absorption performance higher than the reference shock absorption performance was able to be ensured. That is, although the annular structural member was produced from a blank formed by integrating multiple starting materials, a shock absorption performance equivalent to or higher than the shock absorption performance of a structural member produced by joining separately press-formed starting materials was able to be ensured. In Test examples 2 and 3, the yield strength to an axial force was improved since the starting materials were butt-joined to each other, and therefore, the shock absorption performance was better than in Test example 1. In Test examples 2 and 3, in particular, high shock absorption performance against SOL collision was exerted.

REFERENCE SIGNS LIST

| | |
|---|---|
| 10, 10A: | structural member |
| 11: | member main body |
| 111: | front pillar |
| 112: | center pillar |
| 113: | rocker |
| 12: | film |
| 20, 20A: | blank |
| 21: | steel sheet (first steel sheet) |
| 216: | base steel sheet |
| 217: | plating layer |
| 22: | steel sheet (second steel sheet) |
| 23, 24, 25: | steel sheet |
| 26: | film |
| 27: | overlap part |
| 40: | press tooling |

**Claims**

1. A blank for hot stamping, comprising:

   multiple steel sheets that are disposed to form an annular shape in plan view of the blank and joined to each other, wherein the multiple steel sheets include:
   a first steel sheet having a smallest sheet thickness among the multiple steel sheets; and
   a second steel sheet having a sheet thickness larger than the sheet thickness of the first steel sheet, and
   the first steel sheet is configured so that an emissivity of at least one of both surfaces of the first steel sheet is higher than an emissivity of both surfaces of the second steel sheet.

2. The blank according to Claim 1, wherein the first steel sheet has a sheet thickness of less than 1.4 mm.

3. The blank according to Claim 1, wherein the first steel sheet is a plated steel sheet having a base steel sheet and an aluminum-based plating layer provided on the base steel sheet.

4. The blank according to Claim 1, wherein the at least one surface of the first steel sheet is coated with a film having an emissivity of 60% or more at a temperature of 25°C and a wavelength of 8.0 $\mu$m.

5. The blank according to Claim 1, wherein the at least one surface of the first steel sheet is coated with a film,

   the film contains carbon black, one or more oxides selected from among the group consisting of Zr oxide, Zn oxide and Ti oxide, and 0 to 0.30 g/m$^2$ silica, and
   provided that a content of the carbon black in the film is $X_{CB}$ (g/m$^2$), and a content of the oxide is $X_{Oxide}$ (g/m$^2$), $X_{CB}$ and $X_{Oxide}$ satisfy Formula (1):

$$118.9 \leq 24280/\{6700/(100 + 76 \times X_{CB}) + 18000/(130 + 65 \times X_{Oxide})\} \leq 332.0$$

$$(1)$$

6. The blank according to Claim 1, wherein the first steel sheet is a plated steel sheet having a base steel sheet and a plating layer provided on the base steel sheet, and
   provided that a sheet thickness of the first steel sheet is $t_{min}$, and a sheet thickness of a steel sheet having a largest sheet thickness among the multiple steel sheets is $t_{max}$, $1.0 < t_{max}/t_{min} \leq 3.2$.

7. The blank according to Claim 1, wherein the first steel sheet is a plated steel sheet having a base steel sheet and a plating layer provided on the base steel sheet,

   the blank further comprises an overlap part that is formed by end parts of adjacent two steel sheets other than the second steel sheet among the multiple steel sheets overlaid on one another, the overlap part having a total sheet thickness of more than 2.5 mm and 4.0 mm or less, and
   each of the two steel sheets is configured so that an emissivity of a surface located on an outer side of the overlap part is higher than the emissivity of both surfaces of the second steel sheet.

8. A production method for a structural member, comprising:

   a step of preparing the blank according to any one of Claims 1 to 7;
   a step of heating the multiple steel sheets included in the blank to an austenite transformation completion temperature or higher; and
   a step of shaping and quenching the heated blank into a structural member having an annular shape in plan view with press tooling.

9. A structural member, comprising:

   a member main body that is formed of multiple steel sheets joined to each other and has an annular shape in plan view, the multiple steel sheets including a first steel sheet having a smallest sheet thickness and a second steel sheet having a sheet thickness larger than the sheet thickness of the first steel sheet; and

a film that is provided on the first steel sheet and contains 0.001 g/m$^2$ or more of one or more oxides selected from among the group consisting of Zr oxide, Zn oxide and Ti oxide.

**10.** A structural member, comprising:

a member main body that is formed of multiple steel sheets joined to each other and has an annular shape in plan view, the multiple steel sheets including a first steel sheet having a smallest sheet thickness and a second steel sheet having a sheet thickness larger than the sheet thickness of the first steel sheet; and
a film that is provided on the first steel sheet and contains 0.500 g/m$^2$ or less carbon black.

**11.** The structural member according to Claim 9 or 10, wherein the structural member is a door ring part of an automobile, and
the member main body includes a front pillar, a center pillar and a rocker that connects the front pillar and the center pillar to each other.

FIG. 1

10

211

21

W

H

212

213

214

215

FIG. 2

FIG. 3A

20

22  $t_{mid}$  $t_{min}$  216  217  26  21

FIG. 3B

20

21  26  217 216  $t_{min}$  $t_{max}$  23

FIG. 3C

<u>20</u>

23

$t_{max}$        $t_{mid}$                    22

FIG. 3D

FIG. 3E

40

42

20

41

FIG. 3F

FIG. 3G

FIG. 4

<u>20A</u>

FIG. 5

FIG. 6

FIG. 7

FIG. 8

Division Pattern 1

FIG. 9A

Division Pattern 2

FIG. 9B

Division Pattern 3

FIG. 9C

Division Pattern 4

FIG. 9D

Division Pattern 5

FIG. 9E

Division Pattern 6

FIG. 9F

Division Pattern 7

FIG. 9G

Division Pattern 8

FIG. 10A

Division Pattern 9

FIG. 10B

Division Pattern 10

FIG. 10C

Division Pattern 11

FIG. 10D

## INTERNATIONAL SEARCH REPORT

| International application No. |
|---|
| **PCT/JP2024/016110** |

**A.    CLASSIFICATION OF SUBJECT MATTER**

*B21D 22/20*(2006.01)i; *B21D 22/26*(2006.01)i; *B62D 25/02*(2006.01)i; *B62D 25/04*(2006.01)i; *B62D 25/20*(2006.01)i; *C23C 26/00*(2006.01)i
FI:    B21D22/20 E; B21D22/20 H; B21D22/26 D; B62D25/02 A; B62D25/04 A; B62D25/04 B; B62D25/20 F; C23C26/00 A

According to International Patent Classification (IPC) or to both national classification and IPC

**B.    FIELDS SEARCHED**

Minimum documentation searched (classification system followed by classification symbols)

B21D22/20; B21D22/26; B62D25/02; B62D25/04; B62D25/20; C23C26/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2022/215229 A1 (NIPPON STEEL CORPORATION) 13 October 2022 (2022-10-13) | 1-11 |
| A | JP 7101730 B2 (G-TEKT CORP.) 15 July 2022 (2022-07-15) | 1-11 |
| A | JP 2021-154370 A (NIPPON STEEL CORPORATION) 07 October 2021 (2021-10-07) | 1-11 |
| A | JP 7260765 B2 (NIPPON STEEL CORPORATION) 19 April 2023 (2023-04-19) | 1-11 |
| P, A | JP 2023-180687 A (KEYLEX CORP.) 21 December 2023 (2023-12-21) | 1-11 |
| P, A | WO 2023/224122 A1 (NIPPON STEEL CORPORATION) 23 November 2023 (2023-11-23) | 1-11 |

☐ Further documents are listed in the continuation of Box C.    ☑ See patent family annex.

| | |
|---|---|
| \*    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **17 June 2024** | **16 July 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/016110**

| Patent document cited in search report | | | Publication date (day/month/year) | Patent family member(s) | | | Publication date (day/month/year) |
|---|---|---|---|---|---|---|---|
| WO | 2022/215229 | A1 | 13 October 2022 | EP | 4268989 | A1 | |
| | | | | CN | 117157428 | A | |
| | | | | KR | 10-2023-0155536 | A | |
| JP | 7101730 | B2 | 15 July 2022 | US | 2023/0311191 | A1 | |
| JP | 2021-154370 | A | 07 October 2021 | (Family: none) | | | |
| JP | 7260765 | B2 | 19 April 2023 | (Family: none) | | | |
| JP | 2023-180687 | A | 21 December 2023 | (Family: none) | | | |
| WO | 2023/224122 | A1 | 23 November 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022215229 A

- JP 2021528248 W